# EUROPEAN PATENT SPECIFICATION

(11) **EP 4 190 172 B1**
(45) Date of publication and mention of the grant of the patent: **26.11.2025**
(21) Application number: 22215192.0
(22) Date of filing: 03.10.2016
(51) Int. Cl.: A23L 27/30, A23L 27/00, A23L 2/00, A23L 2/60, C13B 50/00

(54) **SWEETENER COMPOSITION COMPRISING STEVIOL GLYCOSIDE SWEETENERS WITH IMPROVED FLAVOR PROFILES**
SÜSSMITTELZUBEREITUNG ENTHALTEND STEVIOLGLYCOSIDSÜSSSTOFFE MIT VERBESSERTEN GESCHMACKSPROFILEN
COMPOSITION ÉDULCORANTE COMPRENANT DES GLYCOSIDES DE STÉVIOL PRÉSENTANT DES PROFILS DE SAVEUR AMÉLIORÉS

(30) Priority: 02.10.2015 US 201562236362 P; 11.12.2015 US 201562266174 P
(43) Date of publication of application: 07.06.2023
(62) Divisional of application: 20170361.8
(73) Proprietor: The Coca-Cola Company, Atlanta, GA 30313 (US); PureCircle SDN BHD, 71760 Bandar Enstek, Negeri Sembilan (MY)
(72) Inventor: PRAKASH, Indra, Alpharetta Georgia 30022 (US); JETTI, Rajesh, Atlanta Georgia 30339 (US); TAN, Colin, Marietta Georgia 30068 (US); MA, Gil, Atlanta Georgia 30339 (US); MARKOSYAN, Avetik, Kuala Lumpur 59200 (MY)
(74) Representative: Dehns

(56) References cited:
- WO-A1-2016/085919
- US-A1- 2011 189 360
- US-A1- 2013 071 521
- US-A1- 2014 027 196
- US-A1- 2014 099 403
- US-A1- 2014 227 421
- US-A1- 2015 017 284
- US-B2- 8 299 224
- MASAYA OHTA ET AL: "Characterization of Novel Steviol Glycosides from Leaves of Stevia rebaudiana Morita", OYO TOSHITSU KAGAKU - JOURNAL OF APPLIED GLYCOSCIENCE., vol. 57, no. 3, 17 August 2010 (2010-08-17), JP, pages 199 - 209, XP055121080, ISSN: 1340-3494, DOI: 10.5458/jag.57.199

## Description

### FIELD OF THE INVENTION

The present invention relates generally to sweetener compositions comprising steviol glycoside compositions containing rebaudioside D, rebaudioside M, rebaudioside A, rebaudioside N, rebaudioside O, and rebaudioside E. Disclosed herein but not part of the invention are consumables, particularly beverages, comprising such sweetener compositions, as well as methods for preparing said sweetener compositions and consumables.

### BACKGROUND OF THE INVENTION

Natural caloric sugars, such as sucrose, fructose and glucose, are utilized to provide a pleasant taste to beverages, foods, pharmaceuticals, and oral hygienic/cosmetic products. Sucrose, in particular, imparts a taste preferred by consumers. Although sucrose provides superior sweetness characteristics, it is disadvantageously caloric.

Non-caloric or low caloric sweeteners have been introduced to satisfy consumer demand. However, non- and low caloric sweeteners taste different from natural caloric sugars in ways that frustrate consumers. On a taste basis, non-caloric or low caloric sweeteners exhibit a temporal profile, maximal response, flavor profile, mouth feel, and/or adaptation behavior that differ from sugar. Specifically, non-caloric or low caloric sweeteners exhibit delayed sweetness onset, lingering sweet aftertaste, bitter taste, metallic taste, astringent taste, cooling taste and/or licorice-like taste. On a source basis, many non-caloric or low caloric sweeteners are synthetic chemicals. Consumer desire for natural non-caloric or low caloric sweeteners that tastes like sucrose remains high.

*Stevia rebaudiana* Bertoni is a perennial shrub of the *Asteraceae* (*Compositae*) family native to certain regions of South America. Its leaves have been traditionally used for hundreds of years in Paraguay and Brazil to sweeten local teas and medicines. The plant is commercially cultivated in Japan, Singapore, Taiwan, Malaysia, South Korea, China, Israel, India, Brazil, Australia and Paraguay.

The leaves of the plant contain a mixture containing diterpene glycosides in an amount ranging from about 10% to 15% of the total dry weight. These diterpene glycosides are about 30 to 450 times sweeter than sugar. Structurally, the diterpene glycosides are characterized by a single base, steviol, and differ by the presence of carbohydrate residues at positions C13 and C19. Typically, on a dry weight basis, the four major steviol glycosides found in the leaves of Stevia are dulcoside A (0.3%), rebaudioside C (0.6-1.0%), rebaudioside A (3.8%) and stevioside (9.1%). Other glycosides identified in Stevia extract include rebaudioside B, D, E, and F, steviolbioside and rubusoside. Among these, only stevioside and rebaudioside A are available on a commercial scale. Sweetening compositions comprising steviol glycosides are disclosed in e.g., US 2015/0172284 A1 and US 2013/071521 A1.

Use of isolated steviol glycosides has been limited to date by certain undesirable taste properties, including licorice taste, bitterness, astringency, sweet aftertaste, bitter aftertaste, licorice aftertaste, which become more prominent at increased concentrations.

Accordingly, there remains a need to develop non-caloric sweeteners that provide a temporal and flavor profile similar to the temporal and flavor profile of sucrose.

### SUMMARY OF THE INVENTION

The present invention is defined by the claims and generally relates to sweetener compositions comprising steviol glycoside compositions useful for preparing consumables, such as beverages. Said composition according to the present invention is a sweetener composition comprising a steviol glycoside composition, wherein the steviol glycoside composition has a total steviol glycoside content of about 95% or greater, comprising
rebaudioside D, wherein rebaudioside D accounts for from about 55% to about 70% of the total steviol glycoside content;
rebaudioside M, wherein rebaudioside M accounts for from about 18% to about 30% of the total steviol glycoside content;
rebaudioside A, wherein rebaudioside A accounts for from about 0.5% to about 4% of the total steviol glycoside content;
rebaudioside N, wherein rebaudioside N accounts for from about 0.5% to about 5% of the total steviol glycoside content,
rebaudioside O, wherein rebaudioside O accounts for from about 0.5% to about 5% of the total steviol glycoside content, and
rebaudioside E, wherein rebaudioside E accounts for from about 0.2% to about 2% of the total steviol glycoside content.

The steviol glycoside compositions used in the present invention provide improved sensory properties over purified steviol glycoside sweeteners (i.e. rebaudioside A or rebaudioside M) and mixtures of purified steviol glycoside sweeteners (i.e. rebaudioside M and rebaudioside D). For example, due to the maximal sucrose equivalence of rebaudioside A, zero-calorie beverages sweetened with rebaudioside A only cannot be prepared that have 10 degrees Brix, the level typical of sucrose-sweetened beverages. Moreover, the high concentrations of purified rebaudioside A sweeteners needed to prepare zero-calorie beverage are also accompanied by a high level of sweet aftertaste (i.e. sweetness lingering), which is not desirable to consumers.

The steviol glycoside composition used in the present invention has a total steviol glycoside content of about 95% by weight or greater and contains (a) a major component comprising rebaudioside M and rebaudioside D and (b) a minor component comprising rebaudioside A, rebaudioside N, rebaudioside O and rebaudioside E. In the steviol glycoside composition, rebaudioside D accounts for from about 55% to about 70% total steviol glycoside content by weight; rebaudioside M accounts for from about 18% to about 30% total steviol glycoside content by weight; rebaudioside A accounts for from about 0.5% to about 4% total steviol glycoside content by weight; rebaudioside N accounts for from about 0.5% to about 5% total steviol glycoside content by weight, rebaudioside O accounts for from about 0.5% to about 5% total steviol glycoside content by weight and rebaudioside E accounts for from about 0.2% to about 2% total steviol glycoside content by weight

The rebaudiosides D, M, A, N, O and E may account for at least about 90% of the total steviol glycoside content. The steviol glycoside composition preferably provides a concentration from about 50 ppm to about 900 ppm, and/or from about 3 to about 12 degrees Brix when added to a consumable, e.g. a beverage.

The steviol glycoside composition used in the present invention may have an aqueous solubility of at least about 1.0% (w/w).

In one embodiment, the sweetener composition further comprises allulose. In another embodiment, the sweetener composition further comprises additional sweeteners, additives and/or functional ingredients.

The sweetener compositions can be zero-calorie, low-calorie, mid-calorie or full-calorie. In a particular embodiment, the sweetener compositions are zero-, low- or mid-calorie and further comprise a sweetener selected from the group consisting of sucrose, high fructose corn syrup, fructose, glucose and combinations thereof.

In another aspect, the present disclosure also relates to consumables comprising the sweetener compositions of the present invention. In a particular aspect, the consumable is a beverage or beverage product. The beverages or beverage products can further contain additional sweeteners, additives and/or functional ingredients. The beverages can be zero-calorie, low-calorie, mid-calorie or full-calorie.

In a particular aspect, zero-, low-, or mid calorie beverages comprise the sweetener composition of the present invention. In one particular aspect, the steviol glycoside composition is the only sweetener in a zero-calorie beverage. In another particular aspect, the steviol glycoside composition is present in combination with at least one additional sweetener in low- and mid-calorie beverages.

In still another aspect, the present disclosure relates to methods of preparing a sweetened consumable comprising a sweetener composition of the present invention. In one aspect, the method comprises providing a consumable and adding a sweetener composition of the present invention to the consumable.

In another aspect, the present disclosure relates to a method of preparing a steviol glycoside composition used in the present invention which comprises (i) providing enriched stevia extract comprising from about 5% to about 30% rebaudioside M by weight; (ii) combining the enriched stevia extract with a solvent system comprising at least one organic solvent to provide a first solution; (iii) stirring the first solution and/or seeding the solution to promote crystal formation; and (iv) separating the crystals from the first solution to provide the steviol glycoside composition. The method can further comprise (v) mixing the steviol glycoside composition with water to provide a second solution; (vi) heating the second solution for a period of time sufficient to provide a concentrated solution; and (vii) spray drying the concentrated solution to provide a steviol glycoside composition having a water solubility of about 0.08% (w/w) or greater. In exemplary aspects, the water solubility of the steviol glycoside composition is about 1.0% (w/w) or greater.

### BRIEF DESCRIPTION OF THE DRAWINGS

**FIG. 1****:** Shows the results of a sensory evaluation comparison of diet cola beverages sweetened with 600 ppm Reb M or 600 ppm A95.
**FIG. 2****:** Shows the results of a sensory evaluation of 5 Brix beverages sweetened with 5% sugar, 200 ppm A95 or 200 ppm of 70 wt% Reb D/30 wt% Reb M.
**FIG. 3****:** Shows the results of a sensory evaluation of 10 Brix beverages sweetened with 10% sugar, 900 ppm A95 or 900 ppm of 70 wt% Reb D/30 wt% Reb M.

### DETAILED DESCRIPTION OF THE INVENTION

The sweetener composition of the present invention comprises a steviol glycoside composition as defined in the claims. The steviol glycoside composition has a total steviol glycoside content of about 95% by weight or greater on a dry basis. In some embodiments, the steviol glycoside composition has a total steviol glycoside content of about 96% or greater, about 97% or greater, about 98% or greater or about 99% or greater.

"Total steviol glycoside content", as used herein, refers to the total sum of all steviol glycosides concentration on weight/weight dried basis in a sample.

The major component of the steviol glycoside composition is comprised of rebaudioside D and rebaudioside M. Typically, rebaudioside M and rebaudioside D comprise from about 73% to about 95% of the total steviol glycoside content, such as, for example, from about 73% to about 90%, from about 73% to about 85%, from about 73% to about 80%, from about 80% to about 95%, from about 80% to about 90%, from about 80% to about 85%, from about 85% to about 95%, and from about 85% to about 90%. In a particular embodiment, rebaudioside M and rebaudioside D account for from about 85% to about 95% of the total steviol glycoside content. In another particular embodiment, rebaudioside M and rebaudioside D do not account for more than about 90% of the steviol glycoside composition.

The minor component of the steviol glycoside composition is comprised of rebaudioside A, rebaudioside N, rebaudioside O and rebaudioside E. These four steviol glycosides account for from about 1.7% to about 14% of the total steviol glycoside content, such as, for example, from about 1.7% to about 10%, from about 1.7% to about 5%, from about 5% to about 14%, from about 5% to about 10% and from about 10% to about 14%. In a particular embodiment, rebaudiosides A, N, O and E account for from about 5% to about 10% of the total steviol glycoside content, such as, for example, from about 5% to about 8%.

Taken together, rebaudiosides D, M, A, N, O and E may account for at least about 90% total steviol glycoside content. In some embodiments, these steviol glycosides account for at least about 91% of the total steviol glycoside content, at least about 92%, at least about 93%, at least about 94%, at least about 95%, at least about 96%, at least about 97%.

The steviol glycoside composition can further include steviol glycosides other than rebaudiosides D, M, A, N, O and E. Exemplary steviol glycosides include, but are not limited to, e.g. steviolmonoside, steviolbioside, rubusoside, dulcoside B, dulcoside A, rebaudioside B, rebaudioside G, stevioside, rebaudioside C, rebaudioside F, rebaudioside I, rebaudioside H, rebaudioside L, rebaudioside K, rebaudioside J, rebaudioside M2, rebaudioside D2, synthetic steviol glycosides, e.g. enzymatically glucosylated steviol glycosides and combinations thereof.

Rebaudioside M comprises from about 18% to about 30% of the total steviol glycoside content of the steviol glycoside composition, such as, for example, from about 20% to about 30%, from about 20% to about 25% and from about 25% to about 30%.

Rebaudioside D comprises from about 55% to about 70% of the total steviol glycoside content of the steviol glycoside composition, such as, for example, from about 55% to about 65%, from about 55% to about 60%, from about 60% to about 70%, from about 60% to about 65% and from about 65% to about 70%.

Rebaudioside A comprises from about 0.5% to about 4% of the total steviol glycoside content of the steviol glycoside composition, such as, for example, from about 0.5% to about 3%, from about 0.5% to about 2%, from about 0.5% to about 1%, from about 1% to about 4%, from about 1% to about 3%, from about 1% to about 2%, from about 2% to about 4%, from about 2% to about 3% and from about 3% to about 4%.

Rebaudioside N comprises from about 0.5% to about 5% of the total steviol glycoside content of the steviol glycoside composition, such as, for example, from about 0.5% to about 4%, from about 0.5% to about 3%, from about 0.5% to about 2%, from about 0.5% to about 1%, from about 1% to about 5%, from about 1% to about 4, from about 1% to about 3%, from about 1% to about 2%, from about 2% to about 5%, from about 2% to about 4%, from about 2% to about 3%, from about 3% to about 5%, from about 3% to about 4%, and from about 4% to about 5%.

Rebaudioside O comprises from about 0.5% to about 5% of the total steviol glycoside content of the steviol glycoside composition, such as, for example, from about 0.5% to about 4%, from about 0.5% to about 3%, from about 0.5% to about 2%, from about 0.5% to about 1%, from about 1% to about 5%, from about 1% to about 4%, from about 1% to about 3%, from about 1% to about 2%, from about 2% to about 5%, from about 2% to about 4%, from about 2% to about 3%, from about 3% to about 5%, from about 3% to about 4%, and from about 4% to about 5%.

Rebaudioside E comprises from about 0.2% to about 2% of the total steviol glycoside content of the steviol glycoside composition, such as, for example, from about 0.2% to about 1.5%, from about 0.2% to about 1%, from about 0.2% to about 0.5%, from about 0.5% to about 2%, from about 0.5% to about 1.5%, from about 0.5% to about 1%, from about 1% to about 2%, from about 1% to about 1.5% and from about 1.5% to about 2%.

A steviol glycoside composition comprises rebaudiosides D, M, A, N, O and E, wherein the total steviol glycoside content is about 95% or greater.

The sweetener composition of the present invention comprises a steviol glycoside composition which comprises rebaudiosides D, M, A, N, O and E, wherein the total steviol glycoside content is about 95% or greater, wherein rebaudioside D accounts for from about 55% to about 70% of the total steviol glycoside content, rebaudioside M accounts for from about 18% to about 30% of the total steviol glycoside, rebaudioside A accounts for from about 0.5% to about 4% of the total steviol glycoside content, rebaudioside N accounts for from about 0.5% to about 5% of the total steviol glycoside content, rebaudioside O accounts for from about 0.5% to about 5% of the total steviol glycoside content and rebaudioside E accounts for from about 0.2% to about 2% of the total steviol glycoside content.

In a more particular embodiment, rebaudiosides D, M, A, N, O and E account for at least about 90% of the total steviol glycoside content.

In a yet further embodiment, rebaudiosides D and M account for from about 80% to about 90% of the total steviol glycoside content.

The steviol glycoside composition can be produced by crystallization of stevia extract enriched with rebaudiosides D, M, N and O ("enriched stevia extract") from a solvent system comprising at least one organic solvent and optionally, water. In exemplary methods, the steviol glycoside composition is prepared by (i) combining enriched stevia extract with a solvent system comprising least one organic solvent, and optionally, water, to provide a solution, (ii) stirring the solution and/or seeding to solution to promote crystal formation, and (iii) separating the crystals from the solution to provide the steviol glycoside composition.

The organic solvent is selected from the group including methanol, ethanol, n-propanol, iso-propanol, butanol, acetone, or any other organic solvent known to art. In a particular aspect, the organic solvent is ethanol.

In exemplary aspects, a method of preparing a steviol glycoside composition comprises first crystallizing the enriched stevia extract, as described herein above, to provide crystallized enriched stevia extract, followed by (i) mixing the steviol glycoside composition with water to provide a solution; (ii) heating the solution for a period of time sufficient to provide a concentrated solution; and (iii) spray drying the concentrated solution to provide a steviol glycoside composition of the present invention. In exemplary aspects, the steviol glycoside composition produced by this method has a water solubility of about 0.08% (w/w) or greater, such as, for example, about 1.0% or greater, about 1.5% or greater, about 2.0% or greater or about 2.5% or greater. In exemplary aspects, the steviol glycoside composition has a water solubility of about 1.0% or greater.

In one aspect, the solution is heated in (ii) to a temperature above 100 °C, such as, for example, from about 100 °C to about 120 °C.

In one aspect, the concentrated solution is maintained at an elevated temperature similar to the heating temperature in (ii) while spray drying. In one aspect, the concentrated solution is maintained at a temperature of at least about 100 °C, at least about 105 °C, at least about 110 °C, at least about 115 °C or at least about 120 °C. In other aspects, the concentrated solution is maintained at a temperature between about 100 °C and about 120 °C while spray drying, such as, for example, from about 110 °C and about 120 °C.

In enriched stevia extract, the relative content of rebaudiosides D, M, N and O (calculated relative to total steviol glycosides content) is higher than the relative content of rebaudiosides D, M, N and O (calculated relative to total steviol glycosides content) in the stevia leaves used as raw material. Enriched stevia extract is obtained from dried stevia leaves according to methods described in U.S. Patent No. 8,981,081; U.S.S.N.s. 14/603,941, 14/033,563, 14/362,275, 14/613,615, 14/615,888; PCT applications PCT/US12/70562, and PCT/US14/031129.

In one aspect, enriched stevia extract comprises from about 5% to about 30% rebaudioside M by weight. In more particular aspects, enriched stevia extract comprises 1% to about 5% rebaudioside E by weight, from about 1% to about 10% rebaudioside O by weight, from about 10% to about 30% rebaudioside D by weight, from about 1% to about 10% rebaudioside N by weight, from about 5% to about 30% rebaudioside M by weight and from about 5% to about 15% rebaudioside A by weight. In even more particular aspects, enriched stevia extract comprises about 1.97% rebaudioside E, 7.82% rebaudioside O, 23.92% rebaudioside D, 6.92% rebaudioside N, 12.17% rebaudioside M, 11.91% rebaudioside A and about 2% of other steviol glycosides (all percentages are on w/w anhydrous basis).

In other aspects, a method of preparing a steviol glycoside composition comprises (i) combining a crystallized steviol glycoside composition with water to provide a solution; (ii) heating the solution for a period of time sufficient to provide a concentrated solution; and (iii) spray drying the concentrated solution to provide a steviol glycoside composition of the present invention. The steviol glycoside compositions produced by this method have a water solubility of about 1.0% (w/w) or greater when measured in water at room temperature for 10 minutes, such as, for example, about 1.5% or greater, about 2.0% or greater or about 2.5% or greater.

In one aspect, the steviol glycoside composition used in the present invention has a water solubility of about 1.0% (w/w) or greater when measured in water at room temperature for 10 minutes, such as, for example, about 1.5% or greater, about 2.0% or greater, about 2.5% or greater, or from about 1% to about 2.5%.

Moreover, in some embodiments, a steviol glycoside composition used in the present invention has greater aqueous solubility than certain steviol glycoside mixtures of rebaudioside D and rebaudioside M only. In a particular embodiment, a steviol glycoside composition used in the present invention has an aqueous solubility of at least 0.3% (w/w) greater than the aqueous solubility of a mixture containing about 70% rebaudioside D and about 30% rebaudioside M by weight when measured in water at room temperature for 10 minutes, such as for example, at least about 0.4% greater, at least about 0.5% greater, or at least about 1% greater.

As used herein, "room temperature" and "ambient temperature" are used interchangeably, and refer to about 25 °C.

A number of methods are known in the art for determining aqueous solubility. In one such method, solubility can be determined by a solvent addition method in which a weighed sample is treated with aliquots of water. The mixture is generally vortexed and/or sonicated between additions to facilitate dissolution. Complete dissolution of the test material is determined by visual inspection. Solubility is calculated based on the total solvent used to provide complete dissolution. In particular, the amount of sample added divided by the weight of the solute (water + sample) x 100 provides the solubility in (%w/w). For example, if 0.18 g of sample can be dissolved in 30 g of water, the water solubility is 0.6%.

The steviol glycoside compositions used in the present invention provide improved (i.e. less) astringency, acid- off-notes and sweet aftertaste when added to a consumable (i.e. a beverage) compared to certain steviol glycoside mixtures of rebaudioside D and rebaudioside M only.

In one aspect, the steviol glycoside composition provides a sucrose equivalence of about 2% (w/v) or greater when added to a consumable (e.g. a beverage), such as, for example, about 3% or greater, about 4% or greater, about 5% or greater, about 6% or greater, about 7% or greater, about 8% or greater, about 9% or greater, about 10% or greater, about 11% or greater, about 12% or greater, about 13% or greater or about 14% or greater.

In another aspect, the steviol glycoside composition provides a degrees Brix level of about 3 to about 12 when added to a consumable (e.g. a beverage), such as, for example, about 3 degrees Brix or greater, about 4 degrees Brix or greater, about 5 degrees Brix or greater, about 5 degrees Brix or greater, about 7 degrees Brix or greater, about 8 degrees Brix or greater, about 9 degrees Brix or greater, about 10 degrees Brix or greater and about 11 degrees Brix or greater. The amount of sucrose, and thus another measure of sweetness, in a reference solution may be described in degrees Brix (°Bx). One degree Brix is 1 gram of sucrose in 100 grams of solution and represents the strength of the solution as percentage by weight (% w/w) (strictly speaking, by mass).

In still another aspect, the steviol glycoside composition provides a concentration from about 50 ppm to about 900 ppm when added to a consumable (e.g. a beverage). In a more particular embodiment, the amount of steviol glycosides in the composition is effective to provide a concentration from about 50 ppm to about 600 ppm when added to a consumable (e.g. a beverage), such as, for example, from about 50 to about 500 ppm, from about 50 ppm to about 400 ppm, from about 50 ppm to about 300 ppm, from about 50 ppm to about 200 ppm, from about 50 ppm to about 100 ppm, from about 100 ppm to about 600 ppm, from about 100 ppm to about 500 ppm, from about 100 ppm to about 400 ppm, from about 100 ppm to about 300 ppm, from about 100 ppm to about 200 ppm, from about 200 ppm to about 600 ppm, from about 200 ppm to about 500 ppm, from about 200 ppm to about 400 ppm, from about 200 ppm to about 300 ppm, from about 300 ppm to about 600 ppm, from about 300 ppm to about 500 ppm, from about 300 ppm to about 400 ppm, from about 400 ppm to about 600 ppm, from about 400 ppm to about 500 ppm and from about 500 ppm to about 600 ppm.

In exemplary embodiments, the sweetener composition of the present invention comprises a steviol glycoside composition and at least one additional substance.

In some embodiments, the sweetener compositions of the present invention may include, in addition to the steviol glycoside composition, allulose. The allulose can be present in the sweetener compositions in an amount from about 0.5% to about 5% by weight, such as, for example, about from about 0.5% to about 4%, from about 0.5% to about 3%, from about 0.5% to about 2% and from about 0.5% to about 1.0%.

**In** other embodiments the sweetener compositions of the present invention can also include erythritol. The erythritol can be present in the sweetener compositions in an amount from about 0.01 to about 0.5% by weight.

The sweetener compositions described herein can be customized to provide the desired calorie content. For example, the sweetener compositions can be "full-calorie", such that they impart the desired sweetness when added to a consumable (such as, for example, a beverage) and have about 120 calories per 8 oz. serving. Alternatively, sweetener compositions can be "mid-calorie", such that they impart the desired sweetness when added to a consumable (such as, for example, as beverage) and have less than about 60 calories per 8 oz. serving. In other embodiments, sweetener compositions can be "low-calorie", such that they impart the desired sweetness when added to a consumable (such as, for example, as beverage) and have less than 40 calories per 8 oz. serving. In still other embodiments, the sweetener compositions can be "zero-calorie", such that they impart the desired sweetness when added to a consumable (such as, for example, a beverage) and have less than 5 calories per 8 oz. serving.

In some embodiments, the sweetener compositions further comprise at least one additional sweetener, where the at least one sweetener is different from the steviol glycosides in the steviol glycoside composition and/or allulose and/or erythritol.

The additional sweetener can be any known sweetener, e.g. a natural sweetener, a natural high potency sweetener, a synthetic sweetener.

In one embodiment, the sweetener is at least one natural high-potency sweetener. As used herein, the phrase "natural high potency sweetener" refers to any sweetener found naturally in nature and characteristically has a sweetness potency greater than sucrose, fructose, or glucose, yet has less calories. The natural high potency sweetener can be provided as a pure compound or, alternatively, as part of an extract.

In another embodiment, the sweetener is at least one synthetic sweetener. As used herein, the phrase "synthetic sweetener" refers to any composition which is not found naturally in nature and characteristically has a sweetness potency greater than sucrose, fructose, or glucose, yet has less calories.

In still other embodiments, combinations of natural high potency sweeteners and synthetic sweeteners are contemplated.

In other embodiments, the sweetener is at least one carbohydrate sweetener. Suitable carbohydrate sweeteners are selected from, but not limited to, the group consisting of sucrose, glyceraldehyde, dihydroxyacetone, erythrose, threose, erythrulose, arabinose, lyxose, ribose, xylose, ribulose, xylulose, allose, altrose, galactose, glucose, gulose, idose, mannose, talose, fructose, psicose, sorbose, tagatose, mannoheptulose, sedoheltulose, octolose, fucose, rhamnose, arabinose, turanose, sialose and combinations thereof.

Other suitable sweeteners include mogroside IV, mogroside V, *Luo han guo,* siamenoside, monatin and its salts (monatin SS, RR, RS, SR), curculin, glycyrrhizic acid and its salts, thaumatin, monellin, mabinlin, brazzein, hernandulcin, phyllodulcin, glycyphyllin, phloridzin, trilobatin, baiyunoside, osladin, polypodoside A, pterocaryoside A, pterocaryoside B, mukurozioside, phlomisoside I, periandrin I, abrusoside A, steviolbioside and cyclocarioside I, sugar alcohols such as erythritol, sucralose, potassium acesulfame, acesulfame acid and salts thereof, aspartame, alitame, saccharin and salts thereof, neohesperidin dihydrochalcone, cyclamate, cyclamic acid and salts thereof, neotame, advantame, glucosylated steviol glycosides (GSGs) and combinations thereof.

In one embodiment, the sweetener is a caloric sweetener or mixture of caloric sweeteners. In another embodiment, the caloric sweetener is selected from sucrose, fructose, glucose, high fructose corn/starch syrup, a beet sugar, a cane sugar, and combinations thereof.

In another embodiment, the sweetener is a rare sugar selected from sorbose, lyxose, ribulose, xylose, xylulose, D-allose, L-ribose, D-tagatose, L-glucose, L-fucose, L-arabinose, turanose and combinations thereof. The rare sugars can be present in the sweetener compositions in an amount from about 0.5% to about 3.0% by weight, such as, for example, about 0.5% to about 2.5%, about 0.5% to about 2.0%, about 0.5% to about 1.5%, about 0.5% to about 1.0%, about 1.0% to about 3.0%, about 1.0% to about 2.5%, about 1.0% to about 2.0%, about 1.0% to about 1.5%, about 2.0% to about 3.0% and about 2.0% to about 2.5%.

In one embodiment, a sweetener composition of the present invention comprises the steviol glycoside composition and at least one flavonoid, isoflavonoid or combination thereof. Not wishing to be bound by theory, it is believed that inclusion of the at least one flavonoid, isoflavonoid or combination thereof improves the sweetness temporal profile and enhances the sweetness of the steviol glycoside composition of the present invention.

In one embodiment, the at least one flavonoid or isoflavonoid is present in the sweetener composition in an amount such that it provides a concentration from about 5 ppm to about 50 ppm when added to a consumable, such as, for example, from about 5 ppm to about 30 ppm, from about 5 ppm to about 15 ppm, from about 15 ppm to about 50 ppm, from about 15 ppm to about 30 ppm and from about 30 ppm to about 50 ppm.

"Flavonoid", as used herein interchangeably with the term "bioflavonoid". Suitable flavonoids include, but are not limited to, flavones, flavanols, flavanones, flavanes and flavanols.

Flavones contain a 2-phenylchromen-4-one (2-phenyl-1-benzopyran-4-one) backbone. Exemplary flavones include apigenin, tangeritin, chrysin, 6-hydroxyflavone, baicalein, scutellarein, wogonin, diosmin, flavoxate and 7,8-dihydroxyflavone.

Flavanones have the same backbone as flavones, but can be glycosylated by a disaccharide, typically rutinose or neohesperidose, at the 7 position. Exemplary aglycone flavanones include butin, hesperetin, naringenin, eriodictyol, homoeriodictyol, sakuranetin, sterubin and isosakuranetin. Exemplary flavanone glycosides include didymin, eriocitrin, hesperidin, narirutin, naringin, neoeriocitrin, neohesperidin, poncirin and sakuranin.

Flavans contain a 2-phenyl-3,4-dihydro-2H-chromene backbone. Flavans include flavan-3-ols, flavan-4-ols and flavan-3,4-diols. Exemplary flavans include catechin, epicatechin gallate, epigallocatechin, epigallocatechin gallate, proanthocyanidins, theaflavins, thearubigins, apiforol, luteoforol, leucocyanidin, leucodelphinidin, leucofisetinidin, leucomalvidin, leucopelargonidin, leucopeonidin, leucorobinetinidin, melacacidin and teracacidin.

Flavonols contain a 3-hydroxy-2-phenylchromen-4-one, and can also be glycosylated. Exemplary aglycone flavonols include 3-hydroxy flavone, azaleatin, fisetin, galangin, gossypetin, kaempferide, kaempfedrol, isorhamnetin, morin, myricetin, natsudaidain, pachypodol, quercetin, rhamnazin and rhamnetin. Exemplary flavonol glycosides include astragalin, azalein, hyperoside, isoquercitin, kaempferitrin, myricitrin, quercitrin, robinin, rutin, spiraeoside, xanthorhamnin, amurensin, icariin and troxerutin

Isoflavonoids have a slightly different backbone compared to flavonoids- typically a 3-phenylchromen-4-one backbone. Suitable isoflavonoids include, but are not limited to, isoflavones, isoflavonones, isoflavans, pterocarpans and roetonoids.

Suitable sources of isoflavones include, but are not limited to, soy beans, soy products, legumes, alfalfa sprouts, chickpeas, peanuts, and red clover. Isoflavones include daidzein, genistein, irilone, orobol, pseudobaptigenin, anagyroidisoflavone A and B, biochanin A, calycosin, formononetin, glycitein, irigenin. 5-O-methylgenistein, pratensein, prunetin, psitectorigenin, retusin, tectorigenin, daidzein, genistein, iridin, ononin, puerarin, sophoricoside, tectoridin, bidwillol A, derrubone, luteone, 7-O-methylluteone, wighteone, alpinumisoflavone, barbigerone, di-O-methylalpinumisoflavone, 4'-methyl-alpinumisoflavone and rotenoids.

In one embodiment, the flavonoid or isoflavonoid is selected from the group consisting of naringenin, hesperetin, hesperidin, eriodictyol and combinations thereof.

In another embodiment, the sweetener composition of the present invention comprises a steviol glycoside composition and at least one compound selected from the group consisting of phyllodulcin, taxifolin 3-O-acetate and phloretin. Not wishing to be bound by theory, it is believed that inclusion of these compounds, or combinations thereof, improves the sweetness temporal profile and enhances the sweetness of the steviol glycoside composition of the present invention.

In one embodiment, the at least one compound selected from the group consisting of phyllodulcin, taxifolin 3-O-acetate and phloretin is present in the sweetener composition in an amount such that it provides a concentration from about 5 ppm to about 50 ppm when added to a consumable, such as, for example, from about 5 ppm to about 30 ppm, from about 5 ppm to about 15 ppm, from about 15 ppm to about 50 ppm, from about 15 ppm to about 30 ppm and from about 30 ppm to about 50 ppm.

The sweetener compositions may further comprise one or more other additives, detailed herein. In some embodiments, the sweetener composition contains additives including, but not limited to, carbohydrates, polyols, amino acids and their corresponding salts, poly-amino acids and their corresponding salts, sugar acids and their corresponding salts, nucleotides, organic acids, inorganic acids, organic salts including organic acid salts and organic base salts, inorganic salts, bitter compounds, flavorants and flavoring ingredients, astringent compounds, proteins or protein hydrolysates, surfactants, emulsifiers, weighing agents, gums, antioxidants, colorants, flavonoids, alcohols, polymers and combinations thereof. In some embodiments, the additives act to improve the temporal and flavor profile to provide a sweetener composition with a taste similar to sucrose.

In one embodiment, the sweetener compositions further comprise contain one or more polyols. The term "polyol", as used herein, refers to a molecule that contains more than one hydroxyl group. A polyol may be a diol, triol, or a tetraol which contains 2, 3, and 4 hydroxyl groups respectively. A polyol also may contain more than 4 hydroxyl groups, such as a pentaol, hexaol, heptaol, or the like, which contain 5, 6, or 7 hydroxyl groups, respectively. Additionally, a polyol also may be a sugar alcohol, polyhydric alcohol, or polyalcohol which is a reduced form of carbohydrate, wherein the carbonyl group (aldehyde or ketone, reducing sugar) has been reduced to a primary or secondary hydroxyl group.

Non-limiting examples of polyols in some embodiments include maltitol, mannitol, sorbitol, lactitol, xylitol, isomalt, propylene glycol, glycerol (glycerin), threitol, galactitol, palatinose, reduced isomalto-oligosaccharides, reduced xylo-oligosaccharides, reduced gentiooligosaccharides, reduced maltose syrup, reduced glucose syrup, and sugar alcohols or any other carbohydrates capable of being reduced which do not adversely affect taste.

In certain embodiments, the polyol is present in the sweetener compositions in an amount effective to provide a concentration from about 100 ppm to about 250,000 ppm when present in a consumable, such as, for example, a beverage. In other embodiments, the polyol is present in the sweetener compositions in an amount effective to provide a concentration from about 400 ppm to about 80,000 ppm when present in a consumable, such as, for example, from about 5,000 ppm to about 40,000 ppm.

Suitable amino acid additives include, but are not limited to, aspartic acid, arginine, glycine, glutamic acid, proline, threonine, theanine, cysteine, cystine, alanine, valine, tyrosine, leucine, arabinose, trans-4-hydroxyproline, isoleucine, asparagine, serine, lysine, histidine, ornithine, methionine, carnitine, aminobutyric acid (α-, β-, and/or δ-isomers), glutamine, hydroxyproline, taurine, norvaline, sarcosine, and their salt forms such as sodium or potassium salts or acid salts. The amino acid additives also may be in the D- or L-configuration and in the mono-, di-, or tri-form of the same or different amino acids. Additionally, the amino acids may be α-, β-, γ- and/or δ-isomers if appropriate. Combinations of the foregoing amino acids and their corresponding salts (*e.g.*, sodium, potassium, calcium, magnesium salts or other alkali or alkaline earth metal salts thereof, or acid salts) also are suitable additives in some embodiments. The amino acids may be natural or synthetic. The amino acids also may be modified. Modified amino acids refers to any amino acid wherein at least one atom has been added, removed, substituted, or combinations thereof (*e.g.*, N-alkyl amino acid, N-acyl amino acid, or N-methyl amino acid). Non-limiting examples of modified amino acids include amino acid derivatives such as trimethyl glycine, N-methyl-glycine, and N-methyl-alanine. As used herein, modified amino acids encompass both modified and unmodified amino acids. As used herein, amino acids also encompass both peptides and polypeptides (*e.g.*, dipeptides, tripeptides, tetrapeptides, and pentapeptides) such as glutathione and L-alanyl-L-glutamine. Suitable polyamino acid additives include poly-L-aspartic acid, poly-L-lysine (*e.g.,* poly-L-α-lysine or poly-L-ε-lysine), poly-L-ornithine (*e.g.*, poly-L-α-ornithine or poly-L-ε-ornithine), poly-L-arginine, other polymeric forms of amino acids, and salt forms thereof (*e.g.,* calcium, potassium, sodium, or magnesium salts such as L-glutamic acid mono sodium salt). The poly-amino acid additives also may be in the D- or L-configuration. Additionally, the poly-amino acids may be α-, β-, γ-, δ-, and ε-isomers if appropriate. Combinations of the foregoing poly-amino acids and their corresponding salts (*e.g.,* sodium, potassium, calcium, magnesium salts or other alkali or alkaline earth metal salts thereof or acid salts) also are suitable additives in some embodiments. The poly-amino acids described herein also may comprise co-polymers of different amino acids. The poly-amino acids may be natural or synthetic. The poly-amino acids also may be modified, such that at least one atom has been added, removed, substituted, or combinations thereof (e.g., N-alkyl polyamino acid or N-acyl poly-amino acid). As used herein, poly-amino acids encompass both modified and unmodified poly-amino acids. For example, modified poly-amino acids include, but are not limited to, poly-amino acids of various molecular weights (MW), such as poly-L-α-lysine with a MW of 1,500, MW of 6,000, MW of 25,200, MW of 63,000, MW of 83,000, or MW of 300,000.

In particular embodiments, the amino acid is present in the sweetener composition in an amount effective to provide a concentration from about 10 ppm to about 50,000 ppm when present in a consumable, such as, for example, a beverage. In another embodiment, the amino acid is present in the sweetener composition in an amount effective to provide a concentration from about 1,000 ppm to about 10,000 ppm when present in a consumable, such as, for example, from about 2,500 ppm to about 5,000 ppm or from about 250 ppm to about 7,500 ppm.

Suitable sugar acid additives include, but are not limited to, aldonic, uronic, aldaric, alginic, gluconic, glucuronic, glucaric, galactaric, galacturonic, and salts thereof (e.g., sodium, potassium, calcium, magnesium salts or other physiologically acceptable salts), and combinations thereof.

Suitable nucleotide additives include, but are not limited to, inosine monophosphate ("IMP"), guanosine monophosphate ("GMP"), adenosine monophosphate ("AMP"), cytosine monophosphate (CMP), uracil monophosphate (UMP), inosine diphosphate, guanosine diphosphate, adenosine diphosphate, cytosine diphosphate, uracil diphosphate, inosine triphosphate, guanosine triphosphate, adenosine triphosphate, cytosine triphosphate, uracil triphosphate, alkali or alkaline earth metal salts thereof, and combinations thereof. The nucleotides described herein also may comprise nucleotide-related additives, such as nucleosides or nucleic acid bases (*e.g*., guanine, cytosine, adenine, thymine, uracil).

The nucleotide is present in the sweetener composition in an amount effective to provide a concentration from about 5 ppm to about 1,000 ppm when present in consumable, such as, for example, a beverage.

Suitable organic acid additives include any compound which comprises a -COOH moiety, such as, for example, C2-C30 carboxylic acids, substituted hydroxyl C2-C30 carboxylic acids, butyric acid (ethyl esters), substituted butyric acid (ethyl esters), benzoic acid, substituted benzoic acids (*e.g*., 2,4-dihydroxybenzoic acid), substituted cinnamic acids, hydroxyacids, substituted hydroxybenzoic acids, anisic acid substituted cyclohexyl carboxylic acids, tannic acid, aconitic acid, lactic acid, tartaric acid, citric acid, isocitric acid, gluconic acid, glucoheptonic acids, adipic acid, hydroxycitric acid, malic acid, fruitaric acid (a blend of malic, fumaric, and tartaric acids), fumaric acid, maleic acid, succinic acid, chlorogenic acid, salicylic acid, creatine, caffeic acid, bile acids, acetic acid, ascorbic acid, alginic acid, erythorbic acid, polyglutamic acid, glucono delta lactone, and their alkali or alkaline earth metal salt derivatives thereof. In addition, the organic acid additives also may be in either the D- or L-configuration.

Suitable organic acid additive salts include, but are not limited to, sodium, calcium, potassium, and magnesium salts of all organic acids, such as salts of citric acid, malic acid, tartaric acid, fumaric acid, lactic acid (*e.g.,* sodium lactate), alginic acid (*e.g.,* sodium alginate), ascorbic acid (*e.g.,* sodium ascorbate), benzoic acid (*e.g.,* sodium benzoate or potassium benzoate), sorbic acid and adipic acid. The examples of the organic acid additives described optionally may be substituted with at least one group chosen from hydrogen, alkyl, alkenyl, alkynyl, halo, haloalkyl, carboxyl, acyl, acyloxy, amino, amido, carboxyl derivatives, alkylamino, dialkylamino, arylamino, alkoxy, aryloxy, nitro, cyano, sulfo, thiol, imine, sulfonyl, sulfenyl, sulfinyl, sulfamyl, carboxalkoxy, carboxamido, phosphonyl, phosphinyl, phosphoryl, phosphino, thioester, thioether, anhydride, oximino, hydrazino, carbamyl, phosphor or phosphonato. In particular embodiments, the organic acid additive is present in the sweetener composition in an amount effective to provide a concentration from about 10 ppm to about 5,000 ppm when present in a consumable, such as, for example, a beverage.

Suitable inorganic acid additives include, but are not limited to, phosphoric acid, phosphorous acid, polyphosphoric acid, hydrochloric acid, sulfuric acid, carbonic acid, sodium dihydrogen phosphate, and alkali or alkaline earth metal salts thereof (*e.g.*, inositol hexaphosphate Mg/Ca).

The inorganic acid additive is present in the sweetener composition in an amount effective to provide a concentration from about 25 ppm to about 25,000 ppm when present in a consumable, such as, for example, a beverage.

Suitable bitter compound additives include, but are not limited to, caffeine, quinine, urea, bitter orange oil, naringin, quassia, and salts thereof.

The bitter compound is present in the sweetener composition in an amount effective to provide a concentration from about 25 ppm to about 25,000 ppm when present in a consumable, such as, for example, a beverage.

Suitable flavorants and flavoring ingredient additives include, but are not limited to, vanillin, vanilla extract, mango extract, cinnamon, citrus, coconut, ginger, viridiflorol, almond, menthol (including menthol without mint), grape skin extract, and grape seed extract. "Flavorant" and "flavoring ingredient" are synonymous and can include natural or synthetic substances or combinations thereof. Flavorants also include any other substance which imparts flavor and may include natural or non-natural (synthetic) substances which are safe for human or animals when used in a generally accepted range. Non-limiting examples of proprietary flavorants include Döhler^{™} Natural Flavoring Sweetness Enhancer K14323 (Döhler^{™}, Darmstadt, Germany), Symrise^{™} Natural Flavor Mask for Sweeteners 161453 and 164126 (Symrise^{™}, Holzminden, Germany), Natural Advantage^{™} Bitterness Blockers 1, 2, 9 and 10 (Natural Advantage^{™}, Freehold, New Jersey, U.S.A.), and Sucramask^{™} (Creative Research Management, Stockton, California, U.S.A.).

The flavorant is present in the sweetener composition in an amount effective to provide a concentration from about 0.1 ppm to about 4,000 ppm when present in a consumable, such as, for example, a beverage.

Suitable polymer additives include, but are not limited to, chitosan, pectin, pectic, pectinic, polyuronic, polygalacturonic acid, starch, food hydrocolloid or crude extracts thereof (e.g., gum acacia senegal (Fibergum^{™}), gum acacia seyal, carageenan), poly-L-lysine (e.g., poly-L-α-lysine or poly-L-ε-lysine), poly-L-ornithine (e.g., poly-L-α-ornithine or poly-L-ε-ornithine), polypropylene glycol, polyethylene glycol, poly(ethylene glycol methyl ether), polyarginine, polyaspartic acid, polyglutamic acid, polyethylene imine, alginic acid, sodium alginate, propylene glycol alginate, and sodium polyethyleneglycolalginate, sodium hexametaphosphate and its salts, and other cationic polymers and anionic polymers.

The polymer is present in the sweetener composition in an amount effective to provide a concentration from about 30 ppm to about 2,000 ppm when present in a consumable, such as, for example, a beverage.

Suitable protein or protein hydrolysate additives include, but are not limited to, bovine serum albumin (BSA), whey protein (including fractions or concentrates thereof such as 90% instant whey protein isolate, 34% whey protein, 50% hydrolyzed whey protein, and 80% whey protein concentrate), soluble rice protein, soy protein, protein isolates, protein hydrolysates, reaction products of protein hydrolysates, glycoproteins, and/or proteoglycans containing amino acids (e.g., glycine, alanine, serine, threonine, asparagine, glutamine, arginine, valine, isoleucine, leucine, norvaline, methionine, proline, tyrosine, hydroxyproline, and the like), collagen (e.g., gelatin), partially hydrolyzed collagen (e.g., hydrolyzed fish collagen), and collagen hydrolysates (e.g., porcine collagen hydrolysate).

The protein hydrolysate is present in the sweetener composition in an amount effective to provide a concentration from about 200 ppm to about 50,000 ppm when present in a consumable, such as, for example, a beverage.

Suitable surfactant additives include, but are not limited to, polysorbates (e.g., polyoxyethylene sorbitan monooleate (polysorbate 80), polysorbate 20, polysorbate 60), sodium dodecylbenzenesulfonate, dioctyl sulfosuccinate or dioctyl sulfosuccinate sodium, sodium dodecyl sulfate, cetylpyridinium chloride (hexadecylpyridinium chloride), hexadecyltrimethylammonium bromide, sodium cholate, carbamoyl, choline chloride, sodium glycocholate, sodium taurodeoxycholate, lauric arginate, sodium stearoyl lactylate, sodium taurocholate, lecithins, sucrose oleate esters, sucrose stearate esters, sucrose palmitate esters, sucrose laurate esters, and other emulsifiers, and the like.

The surfactant additive is present in the sweetener composition in an amount effective to provide a concentration from about 30 ppm to about 2,000 ppm when present in a consumable, such as, for example, a beverage.

Suitable flavonoid additives are classified as flavonols, flavones, flavanones, flavan-3-ols, isoflavones, or anthocyanidins. Non-limiting examples of flavonoid additives include, but are not limited to, catechins (e.g., green tea extracts such as Polyphenon^{™} 60, Polyphenon^{™} 30, and Polyphenon^{™} 25 (Mitsui Norin Co., Ltd., Japan), polyphenols, rutins (e.g., enzyme modified rutin Sanmelin^{™} AO (San-fi Gen F.F.I., Inc., Osaka, Japan)), neohesperidin, naringin, neohesperidin dihydrochalcone, and the like.

The flavonoid additive is present in the sweetener composition in an amount effective to provide a concentration from about 0.1 ppm to about 1,000 ppm when present in a consumable, such as, for example, a beverage.

Suitable alcohol additives include, but are not limited to, ethanol. In particular embodiments, the alcohol additive is present in the sweetener composition in an amount effective to provide a concentration from about 625 ppm to about 10,000 ppm when present in a consumable, such as, for example, a beverage.

Suitable astringent compound additives include, but are not limited to, tannic acid, europium chloride (EuCl₃), gadolinium chloride (GdCl₃), terbium chloride (TbCl₃), alum, tannic acid, and polyphenols (e.g., tea polyphenols). The astringent additive is present in the sweetener composition in an amount effective to provide a concentration from about 10 ppm to about 5,000 ppm when present in a consumable, such as, for example, a beverage.

### Functional Ingredients

The sweetener compositions provided herein can also contain one or more functional ingredients, which provide a real or perceived heath benefit to the composition. Functional ingredients include, but are not limited to, saponins, antioxidants, dietary fiber sources, fatty acids, vitamins, glucosamine, minerals, preservatives, hydration agents, probiotics, prebiotics, weight management agents, osteoporosis management agents, phytoestrogens, long chain primary aliphatic saturated alcohols, phytosterols and combinations thereof.

### Saponin

In certain embodiments, the functional ingredient is at least one saponin. As used herein, the at least one saponin may comprise a single saponin or a plurality of saponins as a functional ingredient for the composition provided herein. Generally, according to particular embodiments of this invention, the at least one saponin is present in the composition in an amount sufficient to promote health and wellness.

Saponins are glycosidic natural plant products comprising an aglycone ring structure and one or more sugar moieties. The combination of the nonpolar aglycone and the water soluble sugar moiety gives saponins surfactant properties, which allow them to form a foam when shaken in an aqueous solution.

The saponins are grouped together based on several common properties. In particular, saponins are surfactants which display hemolytic activity and form complexes with cholesterol. Although saponins share these properties, they are structurally diverse. The types of aglycone ring structures forming the ring structure in saponins can vary greatly. Non-limiting examples of the types of aglycone ring structures in saponin for use in particular embodiments of the invention include steroids, triterpenoids, and steroidal alkaloids. Non-limiting examples of specific aglycone ring structures for use in particular embodiments of the invention include soyasapogenol A, soyasapogenol B and soyasopogenol E. The number and type of sugar moieties attached to the aglycone ring structure can also vary greatly. Non-limiting examples of sugar moieties for use in particular embodiments of the invention include glucose, galactose, glucuronic acid, xylose, rhamnose, and methylpentose moieties. Non-limiting examples of specific saponins for use in particular embodiments of the invention include group A acetyl saponin, group B acetyl saponin, and group E acetyl saponin.

Saponins can be found in a large variety of plants and plant products, and are especially prevalent in plant skins and barks where they form a waxy protective coating. Several common sources of saponins include soybeans, which have approximately 5% saponin content by dry weight, soapwort plants (*Saponaria*), the root of which was used historically as soap, as well as alfalfa, aloe, asparagus, grapes, chickpeas, yucca, and various other beans and weeds. Saponins may be obtained from these sources by using extraction techniques well known to those of ordinary skill in the art. A description of conventional extraction techniques can be found in U.S. Pat. Appl. No. 2005/0123662.

### Antioxidant

In certain embodiments, the functional ingredient is at least one antioxidant. As used herein, the at least one antioxidant may comprise a single antioxidant or a plurality of antioxidants as a functional ingredient for the compositions provided herein. Generally, according to particular embodiments of this invention, the at least one antioxidant is present in the composition in an amount sufficient to promote health and wellness.

As used herein "antioxidant" refers to any substance which inhibits, suppresses, or reduces oxidative damage to cells and biomolecules. Without being bound by theory, it is believed that antioxidants inhibit, suppress, or reduce oxidative damage to cells or biomolecules by stabilizing free radicals before they can cause harmful reactions. As such, antioxidants may prevent or postpone the onset of some degenerative diseases.

Examples of suitable antioxidants for embodiments of this invention include, but are not limited to, vitamins, vitamin cofactors, minerals, hormones, carotenoids, carotenoid terpenoids, non-carotenoid terpenoids, flavonoids, flavonoid polyphenolics (e.g., bioflavonoids), flavonols, flavones, phenols, polyphenols, esters of phenols, esters of polyphenols, nonflavonoid phenolics, isothiocyanates, and combinations thereof. In some embodiments, the antioxidant is vitamin A, vitamin C, vitamin E, ubiquinone, mineral selenium, manganese, melatonin, α-carotene, β-carotene, lycopene, lutein, zeanthin, crypoxanthin, reservatol, eugenol, quercetin, catechin, gossypol, hesperetin, curcumin, ferulic acid, thymol, hydroxytyrosol, tumeric, thyme, olive oil, lipoic acid, glutathinone, gutamine, oxalic acid, tocopherol-derived compounds, butylated hydroxyanisole (BHA), butylated hydroxytoluene (BHT), ethylenediaminetetraacetic acid (EDTA), tert-butylhydroquinone, acetic acid, pectin, tocotrienol, tocopherol, coenzyme Q10, zeaxanthin, astaxanthin, canthaxantin, saponins, limonoids, kaempfedrol, myricetin, isorhamnetin, proanthocyanidins, quercetin, rutin, luteolin, apigenin, tangeritin, hesperetin, naringenin, erodictyol, flavan-3-ols (e.g., anthocyanidins), gallocatechins, epicatechin and its gallate forms, epigallocatechin and its gallate forms (ECGC) theaflavin and its gallate forms, thearubigins, isoflavone, phytoestrogens, genistein, daidzein, glycitein, anythocyanins, cyaniding, delphinidin, malvidin, pelargonidin, peonidin, petunidin, ellagic acid, gallic acid, salicylic acid, rosmarinic acid, cinnamic acid and its derivatives (e.g., ferulic acid), chlorogenic acid, chicoric acid, gallotannins, ellagitannins, anthoxanthins, betacyanins and other plant pigments, silymarin, citric acid, lignan, antinutrients, bilirubin, uric acid, R-α-lipoic acid, N-acetylcysteine, emblicanin, apple extract, apple skin extract (applephenon), rooibos extract red, rooibos extract, green, hawthorn berry extract, red raspberry extract, green coffee antioxidant (GCA), aronia extract 20%, grape seed extract (VinOseed), cocoa extract, hops extract, mangosteen extract, mangosteen hull extract, cranberry extract, pomegranate extract, pomegranate hull extract, pomegranate seed extract, hawthorn berry extract, pomella pomegranate extract, cinnamon bark extract, grape skin extract, bilberry extract, pine bark extract, pycnogenol, elderberry extract, mulberry root extract, wolfberry (gogi) extract, blackberry extract, blueberry extract, blueberry leaf extract, raspberry extract, turmeric extract, citrus bioflavonoids, black currant, ginger, acai powder, green coffee bean extract, green tea extract, and phytic acid, or combinations thereof. In alternate embodiments, the antioxidant is a synthetic antioxidant such as butylated hydroxytolune or butylated hydroxyanisole, for example. Other sources of suitable antioxidants for embodiments of this invention include, but are not limited to, fruits, vegetables, tea, cocoa, chocolate, spices, herbs, rice, organ meats from livestock, yeast, whole grains, or cereal grains.

Particular antioxidants belong to the class of phytonutrients called polyphenols (also known as "polyphenolics"), which are a group of chemical substances found in plants, characterized by the presence of more than one phenol group per molecule. A variety of health benefits may be derived from polyphenols, including prevention of cancer, heart disease, and chronic inflammatory disease and improved mental strength and physical strength, for example. Suitable polyphenols for embodiments of this invention include catechins, proanthocyanidins, procyanidins, anthocyanins, quercerin, rutin, reservatrol, isoflavones, curcumin, punicalagin, ellagitannin, hesperidin, naringin, citrus flavonoids, chlorogenic acid, other similar materials, and combinations thereof.

**In** particular embodiments, the antioxidant is a catechin such as, for example, epigallocatechin gallate (EGCG). Suitable sources of catechins for embodiments of this invention include, but are not limited to, green tea, white tea, black tea, oolong tea, chocolate, cocoa, red wine, grape seed, red grape skin, purple grape skin, red grape juice, purple grape juice, berries, pycnogenol, and red apple peel.

In some embodiments, the antioxidant is chosen from proanthocyanidins, procyanidins or combinations thereof. Suitable sources of proanthocyanidins and procyanidins for embodiments of this invention include, but are not limited to, red grapes, purple grapes, cocoa, chocolate, grape seeds, red wine, cacao beans, cranberry, apple peel, plum, blueberry, black currants, choke berry, green tea, sorghum, cinnamon, barley, red kidney bean, pinto bean, hops, almonds, hazelnuts, pecans, pistachio, pycnogenol, and colorful berries.

In particular embodiments, the antioxidant is an anthocyanin. Suitable sources of anthocyanins for embodiments of this invention include, but are not limited to, red berries, blueberries, bilberry, cranberry, raspberry, cherry, pomegranate, strawberry, elderberry, choke berry, red grape skin, purple grape skin, grape seed, red wine, black currant, red currant, cocoa, plum, apple peel, peach, red pear, red cabbage, red onion, red orange, and blackberries.

In some embodiments, the antioxidant is chosen from quercetin, rutin or combinations thereof. Suitable sources of quercetin and rutin for embodiments of this invention include, but are not limited to, red apples, onions, kale, bog whortleberry, lingonberrys, chokeberry, cranberry, blackberry, blueberry, strawberry, raspberry, black currant, green tea, black tea, plum, apricot, parsley, leek, broccoli, chili pepper, berry wine, and ginkgo.

In some embodiments, the antioxidant is reservatrol. Suitable sources of reservatrol for embodiments of this invention include, but are not limited to, red grapes, peanuts, cranberry, blueberry, bilberry, mulberry, Japanese Itadori tea, and red wine.

In particular embodiments, the antioxidant is an isoflavone. Suitable sources of isoflavones for embodiments of this invention include, but are not limited to, soy beans, soy products, legumes, alfalfa sprouts, chickpeas, peanuts, and red clover.

In some embodiments, the antioxidant is curcumin. Suitable sources of curcumin for embodiments of this invention include, but are not limited to, turmeric and mustard.

In particular embodiments, the antioxidant is chosen from punicalagin, ellagitannin or combinations thereof. Suitable sources of punicalagin and ellagitannin for embodiments of this invention include, but are not limited to, pomegranate, raspberry, strawberry, walnut, and oakaged red wine.

In some embodiments, the antioxidant is a citrus flavonoid, such as hesperidin or naringin. Suitable sources of citrus flavonoids, such as hesperidin or naringin, for embodiments of this invention include, but are not limited to, oranges, grapefruits, and citrus juices.

In particular embodiments, the antioxidant is chlorogenic acid. Suitable sources of chlorogenic acid for embodiments of this invention include, but are not limited to, green coffee, yerba mate, red wine, grape seed, red grape skin, purple grape skin, red grape juice, purple grape juice, apple juice, cranberry, pomegranate, blueberry, strawberry, sunflower, Echinacea, pycnogenol, and apple peel.

### Dietary Fiber

In certain embodiments, the functional ingredient is at least one dietary fiber source. As used herein, the at least one dietary fiber source may comprise a single dietary fiber source or a plurality of dietary fiber sources as a functional ingredient for the compositions provided herein. Generally, according to particular embodiments of this invention, the at least one dietary fiber source is present in the composition in an amount sufficient to promote health and wellness.

Numerous polymeric carbohydrates having significantly different structures in both composition and linkages fall within the definition of dietary fiber. Such compounds are well known to those skilled in the art, non-limiting examples of which include non-starch polysaccharides, lignin, cellulose, methylcellulose, the hemicelluloses, β-glucans, pectins, gums, mucilage, waxes, inulins, oligosaccharides, fructooligosaccharides, cyclodextrins, chitins, and combinations thereof.

Polysaccharides are complex carbohydrates composed of monosaccharides joined by glycosidic linkages. Non-starch polysaccharides are bonded with β-linkages, which humans are unable to digest due to a lack of an enzyme to break the β-linkages. Conversely, digestible starch polysaccharides generally comprise α(1-4) linkages.

Lignin is a large, highly branched and cross-linked polymer based on oxygenated phenylpropane units. Cellulose is a linear polymer of glucose molecules joined by a β(1-4) linkage, which mammalian amylases are unable to hydrolyze. Methylcellulose is a methyl ester of cellulose that is often used in foodstuffs as a thickener, and emulsifier. It is commercially available (e.g., Citrucel by GlaxoSmithKline, Celevac by Shire Pharmaceuticals). Hemicelluloses are highly branched polymers consisting mainly of glucurono- and 4-O-methylglucuroxylans. β-Glucans are mixed-linkage (1-3), (1-4) β-D-glucose polymers found primarily in cereals, such as oats and barley. Pectins, such as beta pectin, are a group of polysaccharides composed primarily of D-galacturonic acid, which is methoxylated to variable degrees.

Gums and mucilages represent a broad array of different branched structures. Guar gum, derived from the ground endosperm of the guar seed, is a galactomannan. Guar gum is commercially available (e.g., Benefiber by Novartis AG). Other gums, such as gum arabic and pectins, have still different structures. Still other gums include xanthan gum, gellan gum, tara gum, psylium seed husk gum, and locust been gum.

Waxes are esters of ethylene glycol and two fatty acids, generally occurring as a hydrophobic liquid that is insoluble in water.

Inulins comprise naturally occurring oligosaccharides belonging to a class of carbohydrates known as fructans. They generally are comprised of fructose units joined by β(2-1) glycosidic linkages with a terminal glucose unit. Oligosaccharides are saccharide polymers containing typically three to six component sugars. They are generally found either O- or N-linked to compatible amino acid side chains in proteins or to lipid molecules. Fructooligosaccharides are oligosaccharides consisting of short chains of fructose molecules.

Food sources of dietary fiber include, but are not limited to, grains, legumes, fruits, and vegetables. Grains providing dietary fiber include, but are not limited to, oats, rye, barley, wheat,. Legumes providing fiber include, but are not limited to, peas and beans such as soybeans. Fruits and vegetables providing a source of fiber include, but are not limited to, apples, oranges, pears, bananas, berries, tomatoes, green beans, broccoli, cauliflower, carrots, potatoes, celery. Plant foods such as bran, nuts, and seeds (such as flax seeds) are also sources of dietary fiber. Parts of plants providing dietary fiber include, but are not limited to, the stems, roots, leaves, seeds, pulp, and skin.

Although dietary fiber generally is derived from plant sources, indigestible animal products such as chitins are also classified as dietary fiber. Chitin is a polysaccharide composed of units of acetylglucosamine joined by β(1-4) linkages, similar to the linkages of cellulose.

Sources of dietary fiber often are divided into categories of soluble and insoluble fiber based on their solubility in water. Both soluble and insoluble fibers are found in plant foods to varying degrees depending upon the characteristics of the plant. Although insoluble in water, insoluble fiber has passive hydrophilic properties that help increase bulk, soften stools, and shorten transit time of fecal solids through the intestinal tract.

Unlike insoluble fiber, soluble fiber readily dissolves in water. Soluble fiber undergoes active metabolic processing via fermentation in the colon, increasing the colonic microflora and thereby increasing the mass of fecal solids. Fermentation of fibers by colonic bacteria also yields end-products with significant health benefits. For example, fermentation of the food masses produces gases and short-chain fatty acids. Acids produced during fermentation include butyric, acetic, propionic, and valeric acids that have various beneficial properties such as stabilizing blood glucose levels by acting on pancreatic insulin release and providing liver control by glycogen breakdown. In addition, fiber fermentation may reduce atherosclerosis by lowering cholesterol synthesis by the liver and reducing blood levels of LDL and triglycerides. The acids produced during fermentation lower colonic pH, thereby protecting the colon lining from cancer polyp formation. The lower colonic pH also increases mineral absorption, improves the barrier properties of the colonic mucosal layer, and inhibits inflammatory and adhesion irritants. Fermentation of fibers also may benefit the immune system by stimulating production of T-helper cells, antibodies, leukocytes, splenocytes, cytokinins and lymphocytes.

### Fatty Acid

In certain embodiments, the functional ingredient is at least one fatty acid. As used herein, the at least one fatty acid may be single fatty acid or a plurality of fatty acids as a functional ingredient for the compositions provided herein. Generally, according to particular embodiments of this invention, the at least one fatty acid is present in the composition in an amount sufficient to promote health and wellness.

As used herein, "fatty acid" refers to any straight chain monocarboxylic acid and includes saturated fatty acids, unsaturated fatty acids, long chain fatty acids, medium chain fatty acids, short chain fatty acids, fatty acid precursors (including omega-9 fatty acid precursors), and esterified fatty acids. As used herein, "long chain polyunsaturated fatty acid" refers to any polyunsaturated carboxylic acid or organic acid with a long aliphatic tail. As used herein, "omega-3 fatty acid" refers to any polyunsaturated fatty acid having a first double bond as the third carbon-carbon bond from the terminal methyl end of its carbon chain. In particular embodiments, the omega-3 fatty acid may comprise a long chain omega-3 fatty acid. As used herein, "omega-6 fatty acid" any polyunsaturated fatty acid having a first double bond as the sixth carbon-carbon bond from the terminal methyl end of its carbon chain.

Suitable omega-3 fatty acids for use in embodiments of the present invention can be derived from algae, fish, animals, plants, or combinations thereof, for example. Examples of suitable omega-3 fatty acids include, but are not limited to, linolenic acid, alpha-linolenic acid, eicosapentaenoic acid, docosahexaenoic acid, stearidonic acid, eicosatetraenoic acid and combinations thereof. In some embodiments, suitable omega-3 fatty acids can be provided in fish oils, (e.g., menhaden oil, tuna oil, salmon oil, bonito oil, and cod oil), microalgae omega-3 oils or combinations thereof. In particular embodiments, suitable omega-3 fatty acids may be derived from commercially available omega-3 fatty acid oils such as Microalgae DHA oil (from Martek, Columbia, MD), OmegaPure (from Omega Protein, Houston, TX), Marinol C-38 (from Lipid Nutrition, Channahon, IL), Bonito oil and MEG-3 (from Ocean Nutrition, Dartmouth, NS), Evogel (from Symrise, Holzminden, Germany), Marine Oil, from tuna or salmon (from Arista Wilton, CT), OmegaSource 2000, Marine Oil, from menhaden and Marine Oil, from cod (from OmegaSource, RTP, NC).

Suitable omega-6 fatty acids include, but are not limited to, linoleic acid, gamma-linolenic acid, dihommo-gamma-linolenic acid, arachidonic acid, eicosadienoic acid, docosadienoic acid, adrenic acid, docosapentaenoic acid and combinations thereof.

Suitable esterified fatty acids for embodiments of the present invention may include, but are not limited to, monoacylgycerols containing omega-3 and/or omega-6 fatty acids, diacylgycerols containing omega-3 and/or omega-6 fatty acids, or triacylgycerols containing omega-3 and/or omega-6 fatty acids and combinations thereof.

### Vitamin

In certain embodiments, the functional ingredient is at least one vitamin.

As used herein, the at least one vitamin may be single vitamin or a plurality of vitamins as a functional ingredient for the compositions provided herein. Generally, according to particular embodiments of this invention, the at least one vitamin is present in the composition in an amount sufficient to promote health and wellness.

Vitamins are organic compounds that the human body needs in small quantities for normal functioning. The body uses vitamins without breaking them down, unlike other nutrients such as carbohydrates and proteins. To date, thirteen vitamins have been recognized, and one or more can be used in the compositions herein. Suitable vitamins include, vitamin A, vitamin D, vitamin E, vitamin K, vitamin B1, vitamin B2, vitamin B3, vitamin B5, vitamin B6, vitamin B7, vitamin B9, vitamin B12, and vitamin C. Many of vitamins also have alternative chemical names, non-limiting examples of which are provided below.

| **Vitamin** | **Alternative names** |
|---|---|
| Vitamin A | Retinol |
| | Retinaldehyde |
| | Retinoic acid |
| | Retinoids |
| | Retinal |
| | Retinoic ester |
| Vitamin D (vitamins D1-D5) | Calciferol |
| | Cholecalciferol |
| | Lumisterol |
| | Ergocalciferol |
| | Dihydrotachysterol |
| | 7-dehydrocholesterol |
| Vitamin E | Tocopherol |
| | Tocotrienol |
| Vitamin K | Phylloquinone |
| | Naphthoquinone |
| Vitamin B1 | Thiamin |
| Vitamin B2 | Riboflavin |
| | Vitamin G |
| Vitamin B3 | Niacin |
| | Nicotinic acid |
| | Vitamin PP |
| Vitamin B5 | Pantothenic acid |
| Vitamin B6 | Pyridoxine |
| | Pyridoxal |
| | Pyridoxamine |
| Vitamin B7 | Biotin |
| | Vitamin H |
| Vitamin B9 | Folic acid |
| | Folate |
| | Folacin |
| | Vitamin M |
| | Pteroyl-L-glutamic acid |
| Vitamin B12 | Cobalamin |
| | Cyanocobalamin |
| Vitamin C | Ascorbic acid |

Various other compounds have been classified as vitamins by some authorities. These compounds may be termed pseudo-vitamins and include, but are not limited to, compounds such as ubiquinone (coenzyme Q10), pangamic acid, dimethylglycine, taestrile, amygdaline, flavanoids, para-aminobenzoic acid, adenine, adenylic acid, and s-methylmethionine. As used herein, the term vitamin includes pseudo-vitamins.

In some embodiments, the vitamin is a fat-soluble vitamin chosen from vitamin A, D, E, K and combinations thereof.

In other embodiments, the vitamin is a water-soluble vitamin chosen from vitamin B1, vitamin B2, vitamin B3, vitamin B6, vitamin B12, folic acid, biotin, pantothenic acid, vitamin C and combinations thereof.

### Glucosamine

In certain embodiments, the functional ingredient is glucosamine.

Generally, according to particular embodiments of this invention, glucosamine is present in the compositions in an amount sufficient to promote health and wellness.

Glucosamine, also called chitosamine, is an amino sugar that is believed to be an important precursor in the biochemical synthesis of glycosylated proteins and lipids. D-glucosamine occurs naturally in the cartilage in the form of glucosamine-6-phosphate, which is synthesized from fructose-6-phosphate and glutamine. However, glucosamine also is available in other forms, non-limiting examples of which include glucosamine hydrochloride, glucosamine sulfate, N-acetyl-glucosamine, or any other salt forms or combinations thereof. Glucosamine may be obtained by acid hydrolysis of the shells of lobsters, crabs, shrimps, or prawns using methods well known to those of ordinary skill in the art. In a particular embodiment, glucosamine may be derived from fungal biomass containing chitin, as described in U.S. Patent Publication No. 2006/0172392.

The compositions can further comprise chondroitin sulfate.

### Mineral

In certain embodiments, the functional ingredient is at least one mineral.

As used herein, the at least one mineral may be single mineral or a plurality of minerals as a functional ingredient for the compositions provided herein. Generally, according to particular embodiments of this invention, the at least one mineral is present in the composition in an amount sufficient to promote health and wellness.

Minerals, in accordance with the teachings of this invention, comprise inorganic chemical elements required by living organisms. Minerals are comprised of a broad range of compositions (e.g., elements, simple salts, and complex silicates) and also vary broadly in crystalline structure. They may naturally occur in foods and beverages, may be added as a supplement, or may be consumed or administered separately from foods or beverages.

Minerals may be categorized as either bulk minerals, which are required in relatively large amounts, or trace minerals, which are required in relatively small amounts. Bulk minerals generally are required in amounts greater than or equal to about 100 mg per day and trace minerals are those that are required in amounts less than about 100 mg per day.

In particular embodiments of this invention, the mineral is chosen from bulk minerals, trace minerals or combinations thereof. Non-limiting examples of bulk minerals include calcium, chlorine, magnesium, phosphorous, potassium, sodium, and sulfur. Non-limiting examples of trace minerals include chromium, cobalt, copper, fluorine, iron, manganese, molybdenum, selenium, zinc, and iodine. Although iodine generally is classified as a trace mineral, it is required in larger quantities than other trace minerals and often is categorized as a bulk mineral.

In other particular embodiments of this invention, the mineral is a trace mineral, believed to be necessary for human nutrition, non-limiting examples of which include bismuth, boron, lithium, nickel, rubidium, silicon, strontium, tellurium, tin, titanium, tungsten, and vanadium.

The minerals embodied herein may be in any form known to those of ordinary skill in the art. For example, in a particular embodiment the minerals may be in their ionic form, having either a positive or negative charge. In another particular embodiment the minerals may be in their molecular form. For example, sulfur and phosphorous often are found naturally as sulfates, sulfides, and phosphates.

### Preservative

In certain embodiments, the functional ingredient is at least one preservative.

As used herein, the at least one preservative may be single preservative or a plurality of preservatives as a functional ingredient for the compositions provided herein. Generally, according to particular embodiments of this invention, the at least one preservative is present in the composition in an amount sufficient to promote health and wellness.

In particular embodiments of this invention, the preservative is chosen from antimicrobials, antioxidants, antienzymatics or combinations thereof. Non-limiting examples of antimicrobials include sulfites, propionates, benzoates, sorbates, nitrates, nitrites, bacteriocins, salts, sugars, acetic acid, dimethyl dicarbonate (DMDC), ethanol, and ozone.

According to a particular embodiment, the preservative is a sulfite. Sulfites include, but are not limited to, sulfur dioxide, sodium bisulfite, and potassium hydrogen sulfite.

According to another particular embodiment, the preservative is a propionate. Propionates include, but are not limited to, propionic acid, calcium propionate, and sodium propionate.

According to yet another particular embodiment, the preservative is a benzoate. Benzoates include, but are not limited to, sodium benzoate and benzoic acid.

In another particular embodiment, the preservative is a sorbate. Sorbates include, but are not limited to, potassium sorbate, sodium sorbate, calcium sorbate, and sorbic acid.

In still another particular embodiment, the preservative is a nitrate and/or a nitrite. Nitrates and nitrites include, but are not limited to, sodium nitrate and sodium nitrite.

In yet another particular embodiment, the at least one preservative is a bacteriocin, such as, for example, nisin.

In another particular embodiment, the preservative is ethanol.

In still another particular embodiment, the preservative is ozone.

Non-limiting examples of antienzymatics suitable for use as preservatives in particular embodiments of the invention include ascorbic acid, citric acid, and metal chelating agents such as ethylenediaminetetraacetic acid (EDTA).

### Hydration Agent

In certain embodiments, the functional ingredient is at least one hydration agent.

As used herein, the at least one hydration agent may be single hydration agent or a plurality of hydration agents as a functional ingredient for the compositions provided herein. Generally, according to particular embodiments of this invention, the at least one hydration agent is present in the composition in an amount sufficient to promote health and wellness.

Hydration products help the body to replace fluids that are lost through excretion. For example, fluid is lost as sweat in order to regulate body temperature, as urine in order to excrete waste substances, and as water vapor in order to exchange gases in the lungs. Fluid loss can also occur due to a wide range of external causes, non-limiting examples of which include physical activity, exposure to dry air, diarrhea, vomiting, hyperthermia, shock, blood loss, and hypotension. Diseases causing fluid loss include diabetes, cholera, gastroenteritis, shigellosis, and yellow fever. Forms of malnutrition that cause fluid loss include the excessive consumption of alcohol, electrolyte imbalance, fasting, and rapid weight loss.

In a particular embodiment, the hydration product is a composition that helps the body replace fluids that are lost during exercise. Accordingly, in a particular embodiment, the hydration product is an electrolyte, non-limiting examples of which include sodium, potassium, calcium, magnesium, chloride, phosphate, bicarbonate, and combinations thereof. Suitable electrolytes for use in particular embodiments of this invention are also described in U.S. Patent No. 5,681,569. In particular embodiments, the electrolytes are obtained from their corresponding water-soluble salts. Non-limiting examples of salts for use in particular embodiments include chlorides, carbonates, sulfates, acetates, bicarbonates, citrates, phosphates, hydrogen phosphates, tartrates, sorbates, citrates, benzoates, or combinations thereof. In other embodiments, the electrolytes are provided by juice, fruit extracts, vegetable extracts, tea, or teas extracts.

In particular embodiments of this invention, the hydration product is a carbohydrate to supplement energy stores burned by muscles. Suitable carbohydrates for use in particular embodiments of this invention are described in U.S. Patent Numbers 4,312,856, 4,853,237, 5,681,569, and 6,989,171. Non-limiting examples of suitable carbohydrates include monosaccharides, disaccharides, oligosaccharides, complex polysaccharides or combinations thereof. Non-limiting examples of suitable types of monosaccharides for use in particular embodiments include trioses, tetroses, pentoses, hexoses, heptoses, octoses, and nonoses. Non-limiting examples of specific types of suitable monosaccharides include glyceraldehyde, dihydroxyacetone, erythrose, threose, erythrulose, arabinose, lyxose, ribose, xylose, ribulose, xylulose, allose, altrose, galactose, glucose, gulose, idose, mannose, talose, fructose, psicose, sorbose, tagatose, mannoheptulose, sedoheltulose, octolose, and sialose. Non-limiting examples of suitable disaccharides include sucrose, lactose, and maltose. Non-limiting examples of suitable oligosaccharides include saccharose, maltotriose, and maltodextrin. In other particular embodiments, the carbohydrates are provided by a corn syrup, a beet sugar, a cane sugar, a juice, or a tea.

In another particular embodiment, the hydration is a flavanol that provides cellular rehydration. Flavanols are a class of natural substances present in plants, and generally comprise a 2-phenylbenzopyrone molecular skeleton attached to one or more chemical moieties. Non-limiting examples of suitable flavanols for use in particular embodiments of this invention include catechin, epicatechin, gallocatechin, epigallocatechin, epicatechin gallate, epigallocatechin 3-gallate, theaflavin, theaflavin 3-gallate, theaflavin 3'-gallate, theaflavin 3,3' gallate, thearubigin or combinations thereof. Several common sources of flavanols include tea plants, fruits, vegetables, and flowers. In preferred embodiments, the flavanol is extracted from green tea.

In a particular embodiment, the hydration product is a glycerol solution to enhance exercise endurance. The ingestion of a glycerol containing solution has been shown to provide beneficial physiological effects, such as expanded blood volume, lower heart rate, and lower rectal temperature.

### Probiotics/Prebiotics

In certain embodiments, the functional ingredient is chosen from at least one probiotic, prebiotic and combination thereof.

As used herein, the at least one probiotic or prebiotic may be single probiotic or prebiotic or a plurality of probiotics or prebiotics as a functional ingredient for the compositions provided herein. Generally, according to particular embodiments of this invention, the at least one probiotic, prebiotic or combination thereof is present in the composition in an amount sufficient to promote health and wellness.

Probiotics, in accordance with the teachings of this invention, comprise microorganisms that benefit health when consumed in an effective amount. Desirably, probiotics beneficially affect the human body's naturally-occurring gastrointestinal microflora and impart health benefits apart from nutrition. Probiotics may include, without limitation, bacteria, yeasts, and fungi.

Prebiotics, in accordance with the teachings of this invention, are compositions that promote the growth of beneficial bacteria in the intestines. Prebiotic substances can be consumed by a relevant probiotic, or otherwise assist in keeping the relevant probiotic alive or stimulate its growth. When consumed in an effective amount, prebiotics also beneficially affect the human body's naturally-occurring gastrointestinal microflora and thereby impart health benefits apart from just nutrition. Prebiotic foods enter the colon and serve as substrate for the endogenous bacteria, thereby indirectly providing the host with energy, metabolic substrates, and essential micronutrients. The body's digestion and absorption of prebiotic foods is dependent upon bacterial metabolic activity, which salvages energy for the host from nutrients that escaped digestion and absorption in the small intestine.

According to particular embodiments, the probiotic is a beneficial microorganism that beneficially affects the human body's naturally-occurring gastrointestinal microflora and imparts health benefits apart from nutrition. Examples of probiotics include, but are not limited to, bacteria of the genus *Lactobacilli, Bifidobacteria, Streptococci,* or combinations thereof, that confer beneficial effects to humans.

In particular embodiments of the invention, the at least one probiotic is chosen from the genus *Lactobacilli. Lactobacilli* (i.e., bacteria of the genus *Lactobacillus,* hereinafter "*L*.") have been used for several hundred years as a food preservative and for promoting human health. Non-limiting examples of species of *Lactobacilli* found in the human intestinal tract include *L. acidophilus, L. casei, L. fermentum, L. saliva roes, L. brevis, L. leichmannii, L. plantarum, L. cellobiosus, L. reuteri, L. rhamnosus, L. GG, L. bulgaricus,* and *L. thermophilus,.*

According to other particular embodiments of this invention, the probiotic is chosen from the genus *Bifidobacteria. Bifidobacteria* also are known to exert a beneficial influence on human health by producing short chain fatty acids (e.g., acetic, propionic, and butyric acids), lactic, and formic acids as a result of carbohydrate metabolism. Non-limiting species of *Bifidobacteria* found in the human gastrointestinal tract include *B. angulatum, B. animalis, B. asteroides, B. bifidum, B. boum, B. breve, B. catenulatum, B. choerinum, B. coryneforme, B. cuniculi, B. dentium, B. gallicum, B. gallinarum, B indicum, B. longum, B. magnum, B. merycicum, B. minimum, B. pseudocatenulatum, B. pseudolongum, B. psychraerophilum, B. pullorum, B. ruminantium, B. saeculare, B. scardovii, B. simiae, B. subtile, B. thermacidophilum, B. thermophilum, B. urinalis, and B. sp.*

According to other particular embodiments of this invention, the probiotic is chosen from the genus *Streptococcus. Streptococcus thermophilus* is a gram-positive facultative anaerobe. It is classified as a lactic acid bacteria and commonly is found in milk and milk products, and is used in the production of yogurt. Other non-limiting probiotic species of this bacteria include *Streptococcus salivarus* and *Streptococcus cremoris.*

Probiotics that may be used in accordance with this invention are well-known to those of skill in the art. Non-limiting examples of foodstuffs comprising probiotics include yogurt, sauerkraut, kefir, kimchi, fermented vegetables, and other foodstuffs containing a microbial element that beneficially affects the host animal by improving the intestinal microbalance.

Prebiotics, in accordance with the embodiments of this invention, include, without limitation, mucopolysaccharides, oligosaccharides, polysaccharides, amino acids, vitamins, nutrient precursors, proteins and combinations thereof.

According to a particular embodiment of this invention, the prebiotic is chosen from dietary fibers, including, without limitation, polysaccharides and oligosaccharides. These compounds have the ability to increase the number of probiotics, which leads to the benefits conferred by the probiotics. Non-limiting examples of oligosaccharides that are categorized as prebiotics in accordance with particular embodiments of this invention include fructooligosaccharides, inulins, isomalto-oligosaccharides, lactilol, lactosucrose, lactulose, pyrodextrins, soy oligosaccharides, transgalacto-oligosaccharides, and xylo-oligosaccharides.

According to other particular embodiments of the invention, the prebiotic is an amino acid. Although a number of known prebiotics break down to provide carbohydrates for probiotics, some probiotics also require amino acids for nourishment.

Prebiotics are found naturally in a variety of foods including, without limitation, bananas, berries, asparagus, garlic, wheat, oats, barley (and other whole grains), flaxseed, tomatoes, Jerusalem artichoke, onions and chicory, greens (e.g., dandelion greens, spinach, collard greens, chard, kale, mustard greens, turnip greens), and legumes (e.g., lentils, kidney beans, chickpeas, navy beans, white beans, black beans).

### Weight Management Agent

In certain embodiments, the functional ingredient is at least one weight management agent.

As used herein, the at least one weight management agent may be single weight management agent or a plurality of weight management agents as a functional ingredient for the compositions provided herein. Generally, according to particular embodiments of this invention, the at least one weight management agent is present in the composition in an amount sufficient to promote health and wellness.

As used herein, "a weight management agent" includes an appetite suppressant and/or a thermogenesis agent. As used herein, the phrases "appetite suppressant", "appetite satiation compositions", "satiety agents", and "satiety ingredients" are synonymous. The phrase "appetite suppressant" describes macronutrients, herbal extracts, exogenous hormones, anorectics, anorexigenics, pharmaceutical drugs, and combinations thereof, that when delivered in an effective amount, suppress, inhibit, reduce, or otherwise curtail a person's appetite. The phrase "thermogenesis agent" describes macronutrients, herbal extracts, exogenous hormones, anorectics, anorexigenics, pharmaceutical drugs, and combinations thereof, that when delivered in an effective amount, activate or otherwise enhance a person's thermogenesis or metabolism.

Suitable weight management agents include macronutrient selected from the group consisting of proteins, carbohydrates, dietary fats, and combinations thereof. Consumption of proteins, carbohydrates, and dietary fats stimulates the release of peptides with appetitesuppressing effects. For example, consumption of proteins and dietary fats stimulates the release of the gut hormone cholecytokinin (CCK), while consumption of carbohydrates and dietary fats stimulates release of Glucagon-like peptide 1 (GLP-1).

Suitable macronutrient weight management agents also include carbohydrates. Carbohydrates generally comprise sugars, starches, cellulose and gums that the body converts into glucose for energy. Carbohydrates often are classified into two categories, digestible carbohydrates (e.g., monosaccharides, disaccharides, and starch) and non-digestible carbohydrates (e.g., dietary fiber). Studies have shown that non-digestible carbohydrates and complex polymeric carbohydrates having reduced absorption and digestibility in the small intestine stimulate physiologic responses that inhibit food intake. Accordingly, the carbohydrates embodied herein desirably comprise non-digestible carbohydrates or carbohydrates with reduced digestibility. Non-limiting examples of such carbohydrates include polydextrose; inulin; monosaccharide-derived polyols such as erythritol, mannitol, xylitol, and sorbitol; disaccharidederived alcohols such as isomalt, lactitol, and maltitol; and hydrogenated starch hydrolysates. Carbohydrates are described in more detail herein below.

In another particular embodiment weight management agent is a dietary fat. Dietary fats are lipids comprising combinations of saturated and unsaturated fatty acids. Polyunsaturated fatty acids have been shown to have a greater satiating power than mono-unsaturated fatty acids. Accordingly, the dietary fats embodied herein desirably comprise poly-unsaturated fatty acids, non-limiting examples of which include triacylglycerols.

In a particular embodiment, the weight management agent is an herbal extract. Extracts from numerous types of plants have been identified as possessing appetite suppressant properties. Non-limiting examples of plants whose extracts have appetite suppressant properties include plants of the genus *Hoodia, Trichocaulon, Caralluma, Stapelia, Orbea, Asclepias,* and *Camelia.* Other embodiments include extracts derived from Gymnema Sylvestre, Kola Nut, Citrus Auran tium, Yerba Mate, Griffonia Simplicifolia, Guarana, myrrh, guggul Lipid, and black current seed oil.

The herbal extracts may be prepared from any type of plant material or plant biomass. Non-limiting examples of plant material and biomass include the stems, roots, leaves, dried powder obtained from the plant material, and sap or dried sap. The herbal extracts generally are prepared by extracting sap from the plant and then spray-drying the sap. Alternatively, solvent extraction procedures may be employed. Following the initial extraction, it may be desirable to further fractionate the initial extract (e.g., by column chromatography) in order to obtain an herbal extract with enhanced activity. Such techniques are well known to those of ordinary skill in the art.

In a particular embodiment, the herbal extract is derived from a plant of the genus *Hoodia,* species of which include *H. alstonii, H. currorii, H. dregei, H. flava, H. gordonii, H. jutatae, H. mossamedensis, H. officinalis, H. parviflorai, H. pedicellata, H. pilifera, H. ruschii,* and *H. triebneri. Hoodia* plants are stem succulents native to southern Africa. A sterol glycoside of *Hoodia,* known as P57, is believed to be responsible for the appetite-suppressant effect of the *Hoodia* species.

In another particular embodiment, the herbal extract is derived from a plant of the genus *Caralluma,* species of which include *C*. *indica, C. fimbriata, C. attenuate, C. tuberculata, C. edulis, C. adscendens, C. stalagmifera, C. umbellate, C. penicillata, C. russeliana, C. retrospicens, C. Arabica,* and *C*. *lasiantha. Carralluma* plants belong to the same Subfamily as *Hoodia,* Asclepiadaceae. *Caralluma* are small, erect and fleshy plants native to India having medicinal properties, such as appetite suppression, that generally are attributed to glycosides belonging to the pregnane group of glycosides, non-limiting examples of which include caratuberside A, caratuberside B, bouceroside I, bouceroside II, bouceroside III, bouceroside IV, bouceroside V, bouceroside VI, bouceroside VII, bouceroside VIII, bouceroside IX, and bouceroside X.

In another particular embodiment, the at least one herbal extract is derived from a plant of the genus *Trichocaulon. Trichocaulon* plants are succulents that generally are native to southern Africa, similar to *Hoodia,* and include the species *T. piliferum* and *T. officinale.*

In another particular embodiment, the herbal extract is derived from a plant of the genus *Stapelia* or *Orbea,* species of which include *S. gigantean* and *O*. *variegate,* respectively. Both *Stapelia* and *Orbea* plants belong to the same Subfamily as *Hoodia,* Asclepiadaceae. Not wishing to be bound by any theory, it is believed that the compounds exhibiting appetite suppressant activity are saponins, such as pregnane glycosides, which include stavarosides A, B, C, D, E, F, G, H, I, J, and K.

In another particular embodiment, the herbal extract is derived from a plant of the genus *Asclepias. Asclepias* plants also belong to the Asclepiadaceae family of plants. Non-limiting examples of *Asclepias* plants include *A. incarnate, A. curassayica, A. syriaca,* and *A. tuberose.* Not wishing to be bound by any theory, it is believed that the extracts comprise steroidal compounds, such as pregnane glycosides and pregnane aglycone, having appetite suppressant effects.

In a particular embodiment, the weight management agent is an exogenous hormone having a weight management effect. Non-limiting examples of such hormones include CCK, peptide YY, ghrelin, bombesin and gastrin-releasing peptide (GRP), enterostatin, apolipoprotein A-IV, GLP-1, amylin, somastatin, and leptin.

In another embodiment, the weight management agent is a pharmaceutical drug. Non-limiting examples include phentenime, diethylpropion, phendimetrazine, sibutramine, rimonabant, oxyntomodulin, floxetine hydrochloride, ephedrine, phenethylamine, or other stimulants.

### Osteoporosis Management Agent

In certain embodiments, the functional ingredient is at least one osteoporosis management agent.

As used herein, the at least one osteoporosis management agent may be single osteoporosis management agent or a plurality of osteoporosis management agent as a functional ingredient for the compositions provided herein. Generally, according to particular embodiments of this invention, the at least one osteoporosis management agent is present in the composition in an amount sufficient to promote health and wellness.

Osteoporosis is a skeletal disorder of compromised bone strength, resulting in an increased risk of bone fracture. Generally, osteoporosis is characterized by reduction of the bone mineral density (BMD), disruption of bone micro-architecture, and changes to the amount and variety of non-collagenous proteins in the bone.

In certain embodiments, the osteoporosis management agent is at least one calcium source. According to a particular embodiment, the calcium source is any compound containing calcium, including salt complexes, solubilized species, and other forms of calcium. Non-limiting examples of calcium sources include amino acid chelated calcium, calcium carbonate, calcium oxide, calcium hydroxide, calcium sulfate, calcium chloride, calcium phosphate, calcium hydrogen phosphate, calcium dihydrogen phosphate, calcium citrate, calcium malate, calcium citrate malate, calcium gluconate, calcium tartrate, calcium lactate, solubilized species thereof, and combinations thereof.

According to a particular embodiment, the osteoporosis management agent is a magnesium soucrce. The magnesium source is any compound containing magnesium, including salt complexes, solubilized species, and other forms of magnesium. Non-limiting examples of magnesium sources include magnesium chloride, magnesium citrate, magnesium gluceptate, magnesium gluconate, magnesium lactate, magnesium hydroxide, magnesium picolate, magnesium sulfate, solubilized species thereof, and mixtures thereof. In another particular embodiment, the magnesium source comprises an amino acid chelated or creatine chelated magnesium.

In other embodiments, the osteoporosis agent is chosen from vitamins D, C, K, their precursors and/or beta-carotene and combinations thereof.

Numerous plants and plant extracts also have been identified as being effective in the prevention and treatment of osteoporosis. Not wishing to be bound by any theory, it is believed that the plants and plant extracts stimulates bone morphogenic proteins and/or inhibits bone resorption, thereby stimulating bone regeneration and strength. Non-limiting examples of suitable plants and plant extracts as osteoporosis management agents include species of the genus *Taraxacum* and *Amelanchier,* as disclosed in U.S. Patent Publication No. 2005/0106215, and species of the genus *Lindera, Artemisia, Acorus, Carthamus, Carum, Cnidium, Curcuma, Cyperus, Juniperus, Prunus, Iris, Cichorium, Dodonaea, Epimedium, Erigonoum, Soya, Mentha, Ocimum, thymus, Tanacetum, Plantago, Spearmint, Bixa, Vitis, Rosemarinus, Rhus,* and *Anethum,* as disclosed in U.S. Patent Publication No. 2005/0079232.

### Phytoestrogen

In certain embodiments, the functional ingredient is at least one phytoestrogen.

As used herein, the at least one phytoestrogen may be single phytoestrogen or a plurality of phytoestrogens as a functional ingredient for the compositions provided herein. Generally, according to particular embodiments of this invention, the at least one phytoestrogen is present in the composition in an amount sufficient to promote health and wellness.

Phytoestrogens are compounds found in plants which can typically be delivered into human bodies by ingestion of the plants or the plant parts having the phytoestrogens. As used herein, "phytoestrogen" refers to any substance which, when introduced into a body causes an estrogen-like effect of any degree. For example, a phytoestrogen may bind to estrogen receptors within the body and have a small estrogen-like effect.

Examples of suitable phytoestrogens for embodiments of this invention include, but are not limited to, isoflavones, stilbenes, lignans, resorcyclic acid lactones, coumestans, coumestroI, equol, and combinations thereof. Sources of suitable phytoestrogens include, but are not limited to, whole grains, cereals, fibers, fruits, vegetables, black cohosh, agave root, black currant, black haw, chasteberries, cramp bark, dong quai root, devil's club root, false unicorn root, ginseng root, groundsel herb, licorice, liferoot herb, motherwort herb, peony root, raspberry leaves, rose family plants, sage leaves, sarsaparilla root, saw palmetto berried, wild yam root, yarrow blossoms, legumes, soybeans, soy products (e.g., miso, soy flour, soymilk, soy nuts, soy protein isolate, tempen, or tofu) chick peas, nuts, lentils, seeds, clover, red clover, dandelion leaves, dandelion roots, fenugreek seeds, green tea, hops, red wine, flaxseed, garlic, onions, linseed, borage, butterfly weed, caraway, chaste tree, vitex, dates, dill, fennel seed, gotu kola, milk thistle, pennyroyal, pomegranates, southernwood, soya flour, tansy, and root of the kudzu vine (pueraria root) and the like, and combinations thereof.

Isoflavones belong to the group of phytonutrients called polyphenols. In general, polyphenols (also known as "polyphenolics"), are a group of chemical substances found in plants, characterized by the presence of more than one phenol group per molecule.

Suitable phytoestrogen isoflavones in accordance with embodiments of this invention include genistein, daidzein, glycitein, biochanin A, formononetin, their respective naturally occurring glycosides and glycoside conjugates, matairesinol, secoisolariciresinol, enterolactone, enterodiol, textured vegetable protein, and combinations thereof.

Suitable sources of isoflavones for embodiments of this invention include, but are not limited to, soy beans, soy products, legumes, alfalfa spouts, chickpeas, peanuts, and red clover.

### Long-Chain Primary Aliphatic Saturated Alcohol

In certain embodiments, the functional ingredient is at least one long chain primary aliphatic saturated alcohol.

As used herein, the at least one long chain primary aliphatic saturated alcohol may be single long chain primary aliphatic saturated alcohol or a plurality of long chain primary aliphatic saturated alcohols as a functional ingredient for the compositions provided herein. Generally, according to particular embodiments of this invention, the at least one long chain primary aliphatic saturated alcohol is present in the composition in an amount sufficient to promote health and wellness.

Long-chain primary aliphatic saturated alcohols are a diverse group of organic compounds. The term alcohol refers to the fact these compounds feature a hydroxyl group (-OH) bound to a carbon atom. The term primary refers to the fact that in these compounds the carbon atom which is bound to the hydroxyl group is bound to only one other carbon atom. The term saturated refers to the fact that these compounds feature no carbon to carbon pi bonds. The term aliphatic refers to the fact that the carbon atoms in these compounds are joined together in straight or branched chains rather than in rings. The term long-chain refers to the fact that the number of carbon atoms in these compounds is at least 8 carbons).

Non-limiting examples of particular long-chain primary aliphatic saturated alcohols for use in particular embodiments of the invention include the 8 carbon atom 1-octanol, the 9 carbon 1-nonanol, the 10 carbon atom 1-decanol, the 12 carbon atom 1-dodecanol, the 14 carbon atom 1-tetradecanol, the 16 carbon atom 1-hexadecanol, the 18 carbon atom 1-octadecanol, the 20 carbon atom l-eicosanol, the 22 carbon 1-docosanol, the 24 carbon 1-tetracosanol, the 26 carbon 1-hexacosanol, the 27 carbon 1-heptacosanol, the 28 carbon 1-octanosol, the 29 carbon 1-nonacosanol, the 30 carbon 1-triacontanol, the 32 carbon 1-dotriacontanol, and the 34 carbon 1-tetracontanol.

In a particularly desirable embodiment of the invention, the long-chain primary aliphatic saturated alcohols are policosanol. Policosanol is the term for a mixture of long-chain primary aliphatic saturated alcohols composed primarily of 28 carbon 1-octanosol and 30 carbon 1-triacontanol, as well as other alcohols in lower concentrations such as 22 carbon 1-docosanol, 24 carbon 1-tetracosanol, 26 carbon 1-hexacosanol, 27 carbon 1-heptacosanol, 29 carbon 1-nonacosanol, 32 carbon 1-dotriacontanol, and 34 carbon 1-tetracontanol.

Long-chain primary aliphatic saturated alcohols are derived from natural fats and oils. They may be obtained from these sources by using extraction techniques well known to those of ordinary skill in the art. Policosanols can be isolated from a variety of plants and materials including sugar cane *(Saccharum officinarium),* yams *(e.g. Dioscorea opposite),* bran from rice *(e.g. Oryza sativa),* and beeswax. Policosanols may be obtained from these sources by using extraction techniques well known to those of ordinary skill in the art. A description of such extraction techniques can be found in U.S. Pat. Appl. No. 2005/0220868*.*

### Phytosterols

In certain embodiments, the functional ingredient is at least one phytosterol, phytostanol or combination thereof.

Generally, according to particular embodiments of this invention, the at least one phytosterol, phytostanol or combination thereof is present in the composition in an amount sufficient to promote health and wellness.

As used herein, the phrases "stanol", "plant stanol" and "phytostanol" are synonymous.

Plant sterols and stanols are present naturally in small quantities in many fruits, vegetables, nuts, seeds, cereals, legumes, vegetable oils, bark of the trees and other plant sources. Although people normally consume plant sterols and stanols every day, the amounts consumed are insufficient to have significant cholesterol-lowering effects or other health benefits. Accordingly, it would be desirable to supplement food and beverages with plant sterols and stanols.

Sterols are a subgroup of steroids with a hydroxyl group at C-3. Generally, phytosterols have a double bond within the steroid nucleus, like cholesterol; however, phytosterols also may comprise a substituted side chain (R) at C-24, such as an ethyl or methyl group, or an additional double bond. The structures of phytosterols are well known to those of skill in the art.

At least 44 naturally-occurring phytosterols have been discovered, and generally are derived from plants, such as corn, soy, wheat, and wood oils; however, they also may be produced synthetically to form compositions identical to those in nature or having properties similar to those of naturally-occurring phytosterols. According to particular embodiments of this invention, non-limiting examples of phytosterols well known to those or ordinary skill in the art include 4-desmethylsterols (e.g., β-sitosterol, campesterol, stigmasterol, brassicasterol, 22-dehydrobrassicasterol, and Δ5-avenasterol), 4-monomethyl sterols, and 4,4-dimethyl sterols (triterpene alcohols) (e.g., cycloartenol, 24-methylenecycloartanol, and cyclobranol).

As used herein, the phrases "stanol", "plant stanol" and "phytostanol" are synonymous. Phytostanols are saturated sterol alcohols present in only trace amounts in nature and also may be synthetically produced, such as by hydrogenation of phytosterols. According to particular embodiments of this invention, non-limiting examples of phytostanols include β-sitostanol, campestanol, cycloartanol, and saturated forms of other triterpene alcohols.

Both phytosterols and phytostanols, as used herein, include the various isomers such as the α and β isomers (e.g., α-sitosterol and β-sitostanol, which comprise one of the most effective phytosterols and phytostanols, respectively, for lowering serum cholesterol in mammals).

The phytosterols and phytostanols of the present invention also may be in their ester form. Suitable methods for deriving the esters of phytosterols and phytostanols are well known to those of ordinary skill in the art, and are disclosed in U.S. Patent Numbers 6,589,588, 6,635,774, 6,800,317, and U.S. Patent Publication Number 2003/0045473. Non-limiting examples of suitable phytosterol and phytostanol esters include sitosterol acetate, sitosterol oleate, stigmasterol oleate, and their corresponding phytostanol esters. The phytosterols and phytostanols of the present invention also may include their derivatives.

Generally, the amount of functional ingredient in the composition varies widely depending on the particular composition and the desired functional ingredient. Those of ordinary skill in the art will readily ascertain the appropriate amount of functional ingredient for each composition.

In one embodiment, the sweetener composition provides a sucrose equivalence of about 2% (w/v) or greater when added to a consumable (e.g. a beverage), such as, for example, about 3% or greater, about 4% or greater, about 5% or greater, about 6% or greater, about 7% or greater, about 8% or greater, about 9% or greater, about 10% or greater, about 11% or greater, about 12% or greater, about 13% or greater or about 14% or greater.

In another embodiment, the sweetener composition provides a degrees Brix level of about 3 to about 12 when added to a consumable (e.g. a beverage), such as, for example, about 3 degrees Brix or greater, about 4 degrees Brix or greater, about 5 degrees Brix or greater, about 5 degrees Brix or greater, about 7 degrees Brix or greater, about 8 degrees Brix or greater, about 9 degrees Brix or greater, about 10 degrees Brix or greater and about 11 degrees Brix or greater. The amount of sucrose, and thus another measure of sweetness, in a reference solution may be described in degrees Brix (°Bx). One degree Brix is 1 gram of sucrose in 100 grams of solution and represents the strength of the solution as percentage by weight (% w/w) (strictly speaking, by mass).

In still another embodiment, the amount of steviol glycosides in the sweetener composition is effective to provide a concentration from about 50 ppm to about 900 ppm when the sweetener composition is added to a consumable (e.g. a beverage). In a more particular embodiment, the amount of steviol glycosides in the sweetener composition is effective to provide a concentration from about 50 ppm to about 600 ppm when the sweetener composition added to a consumable or consumable matrix (e.g. a beverage), such as, for example, from about 50 ppm to about 500 ppm, from about 50 ppm to about 400 ppm, from about 50 ppm to about 300 ppm, from about 50 ppm to about 200 ppm, from about 50 ppm to about 100 ppm, from about 100 ppm to about 600 ppm, from about 100 ppm to about 500 ppm, from about 100 ppm to about 400 ppm, from about 100 ppm to about 300 ppm, from about 100 ppm to about 200 ppm, from about 200 ppm to about 600 ppm, from about 200 ppm to about 500 ppm, from about 200 ppm to about 400 ppm, from about 200 ppm to about 300 ppm, from about 300 ppm to about 600 ppm, from about 300 ppm to about 500 ppm, from about 300 ppm to about 400 ppm, from about 400 ppm to about 600 ppm, from about 400 ppm to about 500 ppm and from about 500 ppm to about 600 ppm.

In one aspect, which is not part of the invention, a method for preparing a sweetener composition of the present invention comprises (i) providing a steviol glycoside composition, (ii) providing at least one additional sweetener and/or additive and/or functional ingredient, and (iii) combining the steviol glycoside composition and the at least one sweetener and/or additive and/or functional ingredient to provide a sweetener composition.

### Tabletop Sweetener Compositions

In one embodiment, a tabletop sweetener comprises a steviol glycoside composition of the present invention or a sweetener composition comprising the same.

The tabletop composition can further include at least one bulking agent, additive, anti-caking agent, functional ingredient or combination thereof.

Suitable "bulking agents" include, but are not limited to, maltodextrin (10 DE, 18 DE, or 5 DE), corn syrup solids (20 or 36 DE), sucrose, fructose, glucose, invert sugar, sorbitol, xylose, ribulose, mannose, xylitol, mannitol, galactitol, erythritol, maltitol, lactitol, isomalt, maltose, tagatose, lactose, inulin, glycerol, propylene glycol, polyols, polydextrose, fructooligosaccharides, cellulose and cellulose derivatives, and the like, and mixtures thereof. Additionally, in accordance with still other embodiments of the invention, granulated sugar (sucrose) or other caloric sweeteners such as crystalline fructose, other carbohydrates, or sugar alcohol can be used as a bulking agent due to their provision of good content uniformity without the addition of significant calories.

As used herein, the phrase "anti-caking agent" and "flow agent" refer to any composition which assists in content uniformity and uniform dissolution. In accordance with particular embodiments, non-limiting examples of anti-caking agents include cream of tartar, calcium silicate, silicon dioxide, microcrystalline cellulose (Avicel, FMC BioPolymer, Philadelphia, Pennsylvania), and tricalcium phosphate. In one embodiment, the anti-caking agents are present in the tabletop sweetener composition in an amount from about 0.001 to about 3 % by weight of the tabletop sweetener composition.

The tabletop sweetener compositions can be packaged in any form known in the art. Non-limiting forms include, but are not limited to, powder form, granular form, packets, tablets, sachets, pellets, cubes, solids, and liquids.

In one embodiment, the tabletop sweetener composition is a single-serving (portion control) packet comprising a dry-blend. Dry-blend formulations generally may comprise powder or granules. Although the tabletop sweetener composition may be in a packet of any size, an illustrative non-limiting example of conventional portion control tabletop sweetener packets are approximately 2.5 by 1.5 inches and hold approximately 1 gram of a sweetener composition having a sweetness equivalent to 2 teaspoons of granulated sugar (~ 8 g). The amount of the a steviol glycoside composition of the present invention or a sweetener composition comprising the same in a dry-blend tabletop sweetener formulation can vary. In a particular embodiment, a dry-blend tabletop sweetener formulation may contain steviol glycoside composition in an amount from about 1 % (w/w) to about 10 % (w/w) of the tabletop sweetener composition.

Solid tabletop sweetener embodiments include cubes and tablets. A non-limiting example of conventional cubes are equivalent in size to a standard cube of granulated sugar, which is approximately 2.2 x 2.2 x 2.2 cm³ and weigh approximately 8 g. In one embodiment, a solid tabletop sweetener is in the form of a tablet or any other form known to those skilled in the art.

A tabletop sweetener composition also may be embodied in the form of a liquid, wherein a steviol glycoside composition of the present invention or a sweetener composition comprising the same is combined with a liquid carrier. Suitable non-limiting examples of carrier agents for liquid tabletop sweeteners include water, alcohol, polyol, glycerin base or citric acid base dissolved in water, and mixtures thereof. The sweetness equivalent of a tabletop sweetener composition for any of the forms described herein or known in the art may be varied to obtain a desired sweetness profile. For example, a tabletop sweetener composition may comprise a sweetness comparable to that of an equivalent amount of standard sugar. In another embodiment, the tabletop sweetener composition may comprise a sweetness of up to 100 times that of an equivalent amount of sugar. In another embodiment, the tabletop sweetener composition may comprise a sweetness of up to 90 times, 80 times, 70 times, 60 times, 50 times, 40 times, 30 times, 20 times, 10 times, 9 times, 8 times, 7 times, 6 times, 5 times, 4 times, 3 times, and 2 times that of an equivalent amount of sugar.

### Methods of Use

The sweetener compositions of the present invention can be used to impart sweetness or to enhance the flavor of consumables.

In one aspect, which is not part of the present invention, a method of preparing a sweetened consumable comprises (i) providing a consumable and (ii) adding a sweetener composition of the present invention to the consumable to provide sweetened consumable.

In a particular aspect, which is not part of the present invention, a method of preparing a sweetened consumable comprises (i) providing an unsweetened consumable and (ii) adding a sweetener composition of the present invention to the unsweetened consumable to provide a sweetened consumable.

In one aspect, which is not part of the present invention, a method of preparing a sweetened beverage comprises (i) providing a beverage and (ii) adding a sweetener composition of the present invention to the beverage to provide a sweetened beverage. In a particular aspect, which is not part of the present invention, a method of preparing a sweetened beverage comprises (i) providing an unsweetened beverage and (ii) adding a sweetener composition of the present invention to the unsweetened beverage to provide a sweetened beverage.

### EXAMPLES

### Example 1: Preparation of Enriched Stevia Extract

Two kg of *Stevia rebaudiana* dried leaves (dried at 45°C to 8.0% moisture content) comprising on dry weight basis Stevioside - 2.2%, Reb *A* - 7.1%, Reb *O* - 0.05%, Reb *C* -1.1%, Reb *D* - 0.13%, Reb *F* - 0.1%, Reb *M* - 0.05% Reb *N* - 0.06%, and Reb *E* - 0.12% - were loaded into a continuous extractor and the extraction was carried out with 40 L of water at a pH of 6.5 at 40°C for 160 min. The filtrate was collected and subjected to chemical treatment. Calcium oxide in the amount of 400 g was added to the filtrate to adjust the pH to 9.0, and the mixture was maintained for 15 min with slow agitation. Then, the pH was adjusted to around 3.0 by adding 600 g of FeSO₄ and the mixture was maintained for 15 min with slow agitation. The precipitate was removed by filtration on a plate-and-frame filter press using cotton cloth as the filtration material. The filtrate was passed through a column packed with cation-exchange resin Amberlite FCP22 (H⁺) and then, through a column with anion-exchange resin Amberlite FPA53 (OH⁻). After completion, both columns were washed with RO water to recover the steviol glycosides left in the columns and the filtrates were combined. The combined solution containing 120 g total steviol glycosides was passed through 8 columns, wherein each column was packed with 500mL of macroporous polymeric adsorbent YWD-03 (Cangzhou Yuanwei, China). After all extract was passed through the columns, the resin sequentially was washed with 1 volume of water, 2 volumes of 0.5% NaOH, 1 volume of water, 2 volumes of 0.5% HCl, and finally with water until the pH was 7.0. Elution of the adsorbed steviol glycosides was carried out for each column separately with 52% ethanol. Eluates from 7^{th} and 8^{th} columns were combined and mixed with 0.3% of activated carbon (from the total volume of solution). The suspension was maintained at 25°C for 30 min with continuous agitation. Separation of carbon was carried out on a press-filtration system. For additional decolorization the filtrate was passed through the columns packed with cation-exchange resin Amberlite FCP22 (H⁺) followed with anion-exchange resin Amberlite FPA53 A30B (OH⁻). The ethanol was distilled using a vacuum evaporator. The solids content in the final solution was around 35%. The concentrate was dried with spray drier to yield Enriched Stevia Extract powder comprising 1.97% Reb E, 7.82% Reb O, 23.92% Reb D, 6.92% Reb N, 12.17% Reb M, 11.91% Reb A and about 2% of other steviol glycosides (all percentages are on w/w anhydrous basis).

### Example 2: Preparation of Crystalline A95

100g of Enriched Stevia Extract obtained according to Example 1, was dissolved in 700 mL of 70% Ethanol (v/v). The solution was seeded with 20 mg Reb M crystals and agitated moderately for 4 days at 25°C, for crystallization. The crystals were separated by filtration and washed with 70 mL Ethanol. The crystals were dried under vacuum at 80°C for 12 hrs, to yield about 30g of A95.

### Example 3: Characterization of A95

Analytical high performance liquid chromatography analysis, conducted according to conditions provided below, using reference standards obtained from ChromaDex Inc. (USA), demonstrated that the A95 in Example 2 had the chemical composition shown in Table 1.

*HPLC system:* Agilent 1100 series equipped with quaternary pump, autosampler, thermostatted column compartment and DAD detector, interfaced with Chemstation software *HPLC Column:* Agilent Poroshell 120 SB-C18, 4.6mm x 150mm, 2.7µm, at 40°C

### Mobile Phase

Premix Solution ***A*:** 25 % (v/v) Acentonitrile : 75 % (v/v) Phosphate Buffer (10mM, pH 2.6) Premix Solution ***B*:** 32 % (v/v) Acentonitrile : 68 % (v/v) Phosphate Buffer (10mM, pH 2.6) Gradient program

| Time (min) | Premix Solution ***A*,** % v/v | Premix Solution ***B,*** % v/v |
|---|---|---|
| 0 | 100 | 0 |
| 12 | 100 | 0 |
| 12.5 | 50 | 50 |
| 13 | 0 | 100 |
| 40 | 0 | 100 |

*Flow rate:* 0.5 mL/min
*Injection volume:* 5 µL
*Run time:* 40 mins
*Post time:* 10 mins
*Autosampler temperature:* Ambient
*Detector:* UV at 210 nm (4 nm bw), Reference: 360 nm (100 nm bw)

**Table 1**

| **A95 Component** | **Percent, as determined by HPLC** |
|---|---|
| Rebaudioside E | 0.86 |
| Rebaudioside O | 1.37 |
| Rebaudioside D | 63.95 |
| Rebaudioside N | 2.95 |
| Rebaudioside M | 25.37 |
| Rebaudioside A | 1.32 |
| Stevioside | 0.03 |
| Rebaudioside C | 0.01 |
| Rebaudioside B | 0.22 |
| **Total Steviol Glycoside Content** | **96.07** |

### Example 4: Comparison of Sensory Properties of Diet Cola Beverages

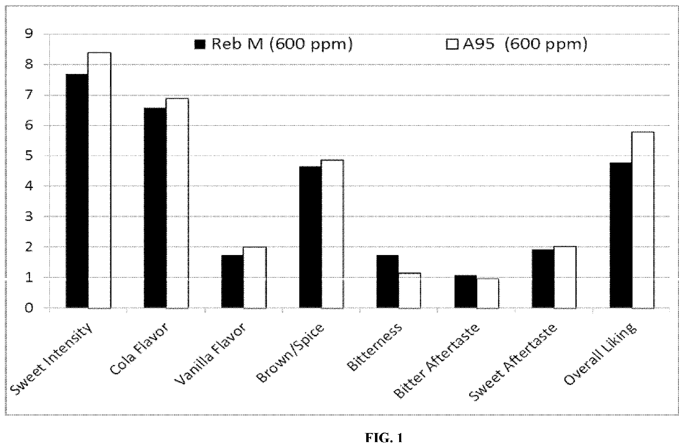

The sensory properties of diet cola beverages sweetened with either (i) Reb M (600 ppm) or (ii) A95 (600 ppm) were evaluated by a panel of ten trained sensory evaluators. The results are shown in Figure 1. The diet cola beverage containing A95 out-performed the diet cola beverage containing Reb M in sweetness intensity, cola flavor, vanilla flavor, brown/spice flavor, sweet aftertaste and overall liking. The diet cola beverage sweetened with A95 also exhibited less bitterness and bitter aftertaste than the diet cola beverage sweetened with Reb M.

### Example 5: Sensory Properties of Fruit-Flavored Carbonated Soft Drinks

The sensory properties of zero-calorie fruit-flavored carbonated soft drinks sweetened with either (i) A95, allulose and a flavor modulator or (ii) A95, allulose and erythritol were evaluated. The beverage sweetened with (i) contained the ingredients shown in Table 1.

**Table 1**

| **Ingredient** | **Amount** |
|---|---|
| A95 | 470-500 ppm |
| Allulose | 2.5-2.8% |
| Flavor modulator | 0.02 to 0.05% |

The beverage sweetened with (ii) contained the ingredients shown in Table 2.

**Table 2**

| **Ingredient** | **Amount** |
|---|---|
| A95 | 440-480 ppm |
| Allulose | 2.8-3.0% |
| Erythritol | 0.4-0.7% |

The usage of A95 in combination with allulose, erythritol and/ or flavor modulators imparted a superior sweetness profile, with no bitter aftertaste and only moderate linger.

### Example 6: Sensory Properties of Ready-to-Drink Tea

The sensory properties of zero-calorie ready-to-drink teas sweetened with either (i) A95, allulose and a flavor modulator or (ii) A95, allulose and erythritol were evaluated. The beverage sweetened with (i) contained the ingredients shown in Table 1.

**Table 1**

| **Ingredient** | **Amount** |
|---|---|
| A95 | 450-470 ppm |
| Allulose | 3-3.4% |
| Flavor modulator | 0.05-0.1% |

The beverage sweetened with (ii) contained the ingredients shown in Table 2.

**Table 2**

| **Ingredient** | **Amount** |
|---|---|
| A95 | 450-470 ppm |
| Allulose | 3-3.4% |
| Erythritol | 0.2-0.3% |

Both zero-calorie tea beverages were 8.6 Brix. The usage of A95 in combination with allulose, erythritol and/ or flavor modulators imparted a superior sweetness profile, with no bitter aftertaste and only moderate linger.

### Example 7: Sensory Properties of Flavored Vitamin Water

The sensory properties of zero-calorie flavored vitamin water sweetened with A95, allulose and erythritol were evaluated. The beverage contained the ingredients shown in Table 1.

**Table 1**

| **Ingredient** | **Amount** |
|---|---|
| A95 | 200-250 ppm |
| Allulose | 3-3.4% |
| Erythritol | 0.025-0.05% |

The usage of A95 in combination with allulose, erythritol and/ or flavor modulators imparted a superior sweetness profile, with no bitter aftertaste and only moderate linger.

### Example 8: Sensory Properties of A95 compared to Reb D/M blends

5 Brix and 10 Brix beverages were prepared by combining purified water containing 303 ppm citric acid and a sweetener. The 5 Brix beverages contained one of the following sweeteners: (i) 5% (wt/wt) sugar, (ii) 200 ppm A95 or (iii) 200 ppm of a 70wt% Reb D/30wt% Reb M blend.

The 10 Brix beverages contained one of the following sweeteners: (i) 10% (wt/wt) sugar, (ii) 900 ppm A95 or (iii) 900 ppm of a 70wt% Reb D/30wt% Reb M blend.

The beverages were served at room temperature in 2 oz clear plastic sample cups. 15 panelists evaluated the beverages for various tastes and flavors. Prior to sample evaluation, all panelists rinsed their palate with warm water. The assessors were instructed to take a sip of each beverage and rate the mouth feel and taste/flavor characteristics. 15 seconds after ingestion panelists were instructed to rate sweetness linger and aftertaste. Between samples evaluation a 1 minute rest period was allowed during which they rinsed their palate with warm water and 0.25% NaCl solution.

The various tastes and flavors measured in the evaluation are defined as follows:

| **TASTE/FLAVOR:** | |
|---|---|
| **Attribute** | **Definition** |
| Sweet Taste | The taste stimulated by sucrose other sugars and artificial sweeteners. |
| Bitter Taste | Taste stimulated by certain substances such as quinine, caffeine. |
| Acidity | The sour taste associated with citric acid, phosphoric or malic acid. |
| Off-note (Metallic/Licorice Flavor) | Fruity flavour associated with licorice or anise. Metallic note associated with Ferrous sulfate. |

| **AFTERTASTE:** | |
|---|---|
| **Attribute** | **Definition** |
| Sweet Aftertaste | The intensity of the sweet taste, 15 minutes after ingestion. |
| Bitter Aftertaste | Aftertaste stimulated by certain substances such as quinine, or caffeine. |

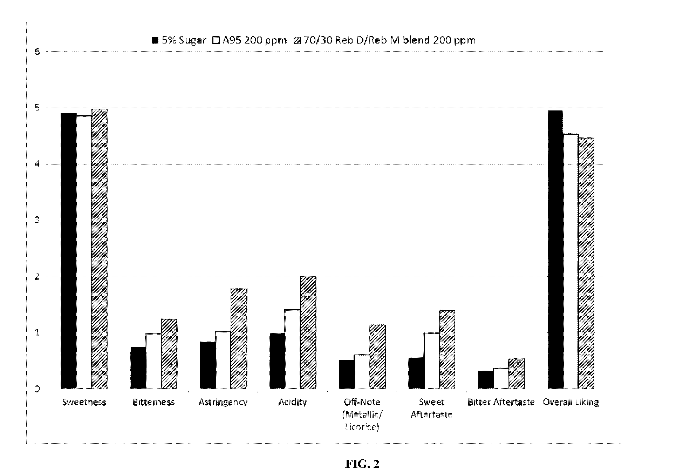

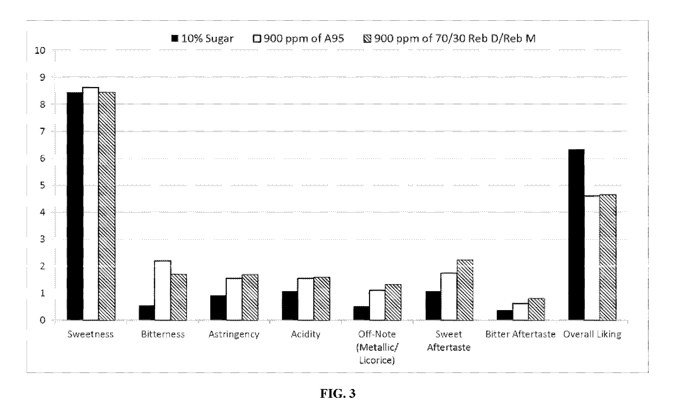

The results of the sensory evaluation for the 5 Brix beverages is provided in Table 1 and illustrated in Figure 2. The results of the sensory evaluation for the 10 Brix beverage is provided in Table 2 and illustrated in Figure 3.

**Table 1: Acidified water 5 brix target - A95 vs Reb D and Reb M blends**

| **Attribute** | **5% Sugar** | **200 ppm of A 95** | **200 ppm of 70/30 Reb D/Reb M blend** | **P-Value** | **Sig** |
|---|---|---|---|---|---|
| **Sweetness** | 4.91 | 4.86 | 4.98 | 0.0997 | |
| | b | ab | a | | |
| **Bitterness** | 0.75 | 0.98 | 1.23 | 0.0083 | *** |
| | b | b | a | | |
| **Astringency** | 0.84 | 1.02 | 1.77 | 0.0035 | *** |
| | c | b | a | | |
| **Acidity** | 0.99 | 1.41 | 1.99 | 0.0012 | *** |
| | b | b | a | | |
| **Off-Note (Metallic/ Licorice)** | 0.52 | 0.61 | 1.13 | 0.0081 | *** |
| | c | b | a | | |
| **Sweet Aftertaste** | 0.56 | 0.99 | 1.38 | 0.0046 | *** |
| | | | | | |
| **Bitter Aftertaste** | 0.33 | 0.37 | 0.53 | 0.5487 | NS |
| | a | b | b | | |
| **Overall Liking** | 4.96 | 4.53 | 4.46 | 0.1964 | * |

| | | | | | |
|---|---|---|---|---|---|
| *= 80% confidence interval, **= 90% Confidence interval, ***=95% Confidence interval Same letter indicates no significant difference in taste. | | | | | |

**Table 2: Acidified water 10 brix target - A95 vs Reb D and Reb M blends**

| **Attribute** | **10% Sugar** | **900 ppm of A95** | **900 ppm of 70/30 Reb D/Reb M** | **P-Value** | **Sig** |
|---|---|---|---|---|---|
| **Sweetness** | 8.45 | 8.62 | 8.45 | 0.8794 | NS |
| | b | a | a | | |
| **Bitterness** | 0.55 | 2.18 | 1.72 | 0.0147 | *** |
| | b | a | a | | |
| **Astringency** | 0.92 | 1.55 | 1.71 | 0.0762 | ** |
| | b | a | a | | |
| **Acidity** | 1.08 | 1.56 | 1.61 | 0.0508 | ** |
| | b | a | a | | |
| **Off-Note (Metallic/ Licorice)** | 0.51 | 1.11 | 1.34 | 0.0028 | *** |
| | c | b | a | | |
| **Sweet Aftertaste** | 1.08 | 1.75 | 2.25 | 0.0029 | *** |
| | b | a | a | | |
| **Bitter Aftertaste** | 0.37 | 0.62 | 0.82 | 0.0464 | *** |
| | a | b | b | | |
| **Overall Liking** | 6.34 | 4.6 | 4.65 | 0.0091 | *** |

| | | | | | |
|---|---|---|---|---|---|
| *= 80% confidence interval, **= 90% Confidence interval, ***=95% Confidence interval Same letter indicates no significant difference in taste. | | | | | |

Beverages containing the 70% Reb D/30% Reb M sweetener were significantly different from A95 and sugar at a 95% confidence level across key attributes, regardless of Brix. With respect to the 5 Brix beverages, the beverages with A95 and 70% Reb D/30% Reb M sweeteners had parity of sweetness. The beverages containing the 70% Reb D/30% Reb M sweetener had significantly higher astringency, acid, off-notes, and sweet aftertaste compared to beverages containing the A95 sweetener. With respect to the 10 Brix beverages, the beverages with A95 and 70% Reb D/30% Reb M sweeteners had parity of sweetness. The beverages containing the 70% Reb D/30% Reb M sweetener had significantly higher sweet aftertaste compared to beverages containing the A95 sweetener.

### Example 9: Preparation of A95 via spray-drying method

A95 that was crystallized according to the method of Example 2 and having water solubility of 0.08% (w/w) (determined according to procedure described above) was mixed with 225 liters of water in airtight pressure vessel. The mixture temperature was increased to 115 °C to obtain a concentrated solution. The A95 concentrated solution was maintained at 115°C while being fed via insulated piping to spray drier (YPG-250, Changzhou Lemar Drying Machinery, China) operating at 185 °C inlet and 100 °C outlet temperature. 22 kg of a powder was obtained which had a water solubility of about 2% (w/w) (determined according by the procedure described above).

## Claims

1. A sweetener composition comprising a steviol glycoside composition, wherein the steviol glycoside composition has a total steviol glycoside content of about 95% or greater, comprising
rebaudioside D, wherein rebaudioside D accounts for from about 55% to about 70% of the total steviol glycoside content;
rebaudioside M, wherein rebaudioside M accounts for from about 18% to about 30% of the total steviol glycoside content;
rebaudioside A, wherein rebaudioside A accounts for from about 0.5% to about 4% of the total steviol glycoside content;
rebaudioside N, wherein rebaudioside N accounts for from about 0.5% to about 5% of the total steviol glycoside content,
rebaudioside O, wherein rebaudioside O accounts for from about 0.5% to about 5% of the total steviol glycoside content, and
rebaudioside E, wherein rebaudioside E accounts for from about 0.2% to about 2% of the total steviol glycoside content.

2. The sweetener composition of claim 1, wherein the sweetener composition is a tabletop sweetener composition.

3. The sweetener composition of claim 1 or claim 2, further comprising allulose.

4. The sweetener composition of claim 1 or claim 2, further comprising at least one flavonoid, isoflavonoid, phyllodulcin, taxifolin 3-O-acetate, phloretin or combination thereof.

5. The sweetener composition of any preceding claim, further comprising at least one additional sweetener.

6. The sweetener composition of claim 5, wherein the at least one additional sweetener is selected from sucrose, high fructose corn syrup, fructose, glucose and combinations thereof.

7. The sweetener composition of any preceding claim, further comprising one or more additives and/or functional ingredients.

8. The sweetener composition of any preceding claim, wherein the sweetener composition is a zero-, mid-, or low-calorie sweetener composition.

## Patentansprüche

1. Süßungsmittelzusammensetzung, umfassend eine Steviolglykosidzusammensetzung, wobei die Steviolglykosidzusammensetzung einen Gesamtsteviolglykosidgehalt von etwa 95% oder mehr aufweist, umfassend:
Rebaudiosid D, wobei Rebaudiosid D etwa 55% bis etwa 70% des Gesamtsteviolglykosidgehalts ausmacht,
Rebaudiosid M, wobei Rebaudiosid M etwa 18% bis etwa 30% des Gesamtsteviolglykosidgehalts ausmacht,
Rebaudiosid A, wobei Rebaudiosid A etwa 0,5% bis etwa 4% des Gesamtsteviolglykosidgehalts ausmacht,
Rebaudiosid N, wobei Rebaudiosid N etwa 0,5% bis etwa 5% des Gesamtsteviolglykosidgehalts ausmacht,
Rebaudiosid O, wobei Rebaudiosid O etwa 0,5% bis etwa 5% des Gesamtsteviolglykosidgehalts ausmacht und
Rebaudiosid E, wobei Rebaudiosid E etwa 0,2% bis etwa 2% des Gesamtsteviolglykosidgehalts ausmacht.

2. Süßungsmittelzusammensetzung nach Anspruch 1, wobei es sich bei der Süßungsmittelzusammensetzung um eine Tafel-Süßungsmittelzusammensetzung handelt.

3. Süßungsmittelzusammensetzung nach Anspruch 1 oder Anspruch 2, die ferner Allulose umfasst.

4. Süßungsmittelzusammensetzung nach Anspruch 1 oder Anspruch 2, die ferner mindestens ein Flavonoid, Isoflavonoid, Phyllodulcin, Taxifolin-3-O-acetat, Phloretin oder eine Kombination davon umfasst.

5. Süßungsmittelzusammensetzung nach einem der vorhergehenden Ansprüche, die ferner mindestens ein zusätzliches Süßungsmittel umfasst.

6. Süßungsmittelzusammensetzung nach Anspruch 5, wobei das mindestens eine zusätzliche Süßungsmittel aus Saccharose, Maissirup mit hohem Fructosegehalt, Fructose, Glucose und Kombinationen davon ausgewählt ist.

7. Süßungsmittelzusammensetzung nach einem der vorhergehenden Ansprüche, die ferner ein oder mehrere Additive und/oder funktionale Inhaltsstoffe umfasst.

8. Süßungsmittelzusammensetzung nach einem der vorhergehenden Ansprüche, wobei es sich bei der Süßungsmittelzusammensetzung um eine kalorienfreie, mittelkalorische oder kalorienarme Süßungsmittelzusammensetzung handelt.

## Revendications

1. Composition d'édulcorant comprenant une composition de glycosides de stéviol, la composition de glycosides de stéviol possédant une teneur totale en glycosides de stéviol d'environ 95 % ou plus, comprenant
du rébaudioside D, le rébaudioside D représentant d'environ 55 % à environ 70 % de la teneur totale en glycosides de stéviol ;
du rébaudioside M, le rébaudioside M représentant d'environ 18 % à environ 30 % de la teneur totale en glycosides de stéviol ;
du rébaudioside A, le rébaudioside A représentant d'environ 0,5 % à environ 4 % de la teneur totale en glycosides de stéviol ;
du rébaudioside N, le rébaudioside N représentant d'environ 0,5 % à environ 5 % de la teneur totale en glycosides de stéviol,
du rébaudioside O, le rébaudioside O représentant d'environ 0,5 % à environ 5 % de la teneur totale en glycosides de stéviol, et
du rébaudioside E, le rébaudioside E représentant d'environ 0,2 à environ 2 % de la teneur totale en glycosides de stéviol.

2. Composition d'édulcorant selon la revendication 1, la composition d'édulcorant étant une composition d'édulcorant de table.

3. Composition d'édulcorant selon la revendication 1 ou la revendication 2, comprenant en outre de l'allulose.

4. Composition d'édulcorant selon la revendication 1 ou la revendication 2, comprenant en outre au moins un flavonoïde, isoflavonoïde, phyllodulcine, 3-O-acétate de taxifoline, phlorétine ou une combinaison correspondante.

5. Composition d'édulcorant selon une quelconque revendication précédente, comprenant en outre au moins un édulcorant supplémentaire.

6. Composition d'édulcorant selon la revendication 5, l'au moins un édulcorant supplémentaire étant choisi parmi le saccharose, un sirop de maïs à teneur élevée en fructose, le fructose, le glucose et des combinaisons correspondantes.

7. Composition d'édulcorant selon une quelconque revendication précédente, comprenant en outre un ou plusieurs additifs et/ou ingrédients fonctionnels.

8. Composition d'édulcorant selon une quelconque revendication précédente, la composition d'édulcorant étant une composition d'édulcorant à zéro calorie, moyennement calorique ou peu calorique.
